Europäisches Patentamt

European Patent Office

Office européen des brevets

(11) Publication number: **0 476 487 A2**

# EUROPEAN PATENT APPLICATION

(21) Application number: **91115278.3**

(51) Int. Cl.5: **H04L 7/033**

(22) Date of filing: **10.09.91**

(30) Priority: **10.09.90 JP 237228/90**
**20.10.90 JP 282625/90**
**20.10.90 JP 282632/90**

(43) Date of publication of application:
**25.03.92 Bulletin 92/13**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **Miyoshi, Seiji, Fujitsu Ibukino**
**Shataku A202**
**55-8, Ibukino, Midori-ku**
**Yokohama-shi, Kanagawa 227(JP)**
Inventor: **Sato, Takashi**
**4-18-17, Higashiterao, Tsurumi-ku**
**Yokohama-shi, Kanagawa 230(JP)**
Inventor: **Takato, Kenji, Pakuhaitsu Yurigaoka**
**106**
**4-17-1, Takaishi, Aso-ku**
**Kawasaki-shi, Kanagawa 215(JP)**
Inventor: **Ujiie, Hiroyuki**
**3-12-1, Goten**
**Hiratsuka-shi, Kanagawa 254(JP)**

Inventor: **Iketani, Yozo, Dai-3 Ebisuso 102**
**1627-5, Ichigao-cho, Midori-ku**
**Yokohama-shi, Kanagawa 225(JP)**
Inventor: **Kawada, Kinji**
**Shibuyamansyon, 19-13, Shinjonaka-machi**
**Nakahara-ku, Kawasaki-shi, Kanagawa**
**211(JP)**
Inventor: **Fukuda, Misao**
**1-20-14, Igusa**
**Suginami-ku, Tokyo 167(JP)**
Inventor: **Itokawa, Hiroaki**
**6-8-3, Shimokodanaka, Nakahara-ku**
**Kawasaki-shi, Kanagawa 211(JP)**
Inventor: **Ueno, Norio**
**3-2-2, Takeyama, Midori-ku**
**Yokohama-shi, Kanagawa 226(JP)**
Inventor: **Awata, Yutaka**
**1-1-2-510, Shinjo, Nakahara-ku**
**Kawasaki-shi, Kanagawa 211(JP)**
Inventor: **Tokiwa, Kouji**
**1793-754-201, Kanamori**
**Machida-shi, Tokyo 194(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) System for reproducing timing clock signal.

(57) A timing clock reproducing system in a digital subscriber line communication for extracting an optimum phase of a clock signal, and comprising: a line equalizer (111) for shaping a waveform distorted by a transmission through a cable line; a PLL circuit (112) for generating a sampling timing control signal; an analog-to-digital converter (113) for sampling a signal received from the line equalizer at a timing controlled by the sampling timing control, and for converting the received signal into a digital signal; a decision feedback equalizer (114), for outputting tap coefficients including a precursor equalizing tap coefficient; and an evaluating function deriving means (115) for deriving an evaluating function the based the PLL circuit (112) being controlled by the valuating function for adjusting a sampling timing of the analog-to-digital converter.

# Fig. 20

RECEIVED
SIGNAL → | LINE EQUALIZER (111) | → | A D C (113) | → | D F E (114) | → | EVALUATING FUNCTION UNIT (115) |

| PLL CIRCUIT (112) |

## BACKGROUND OF THE INVENTION

Field of the Invention

The present invention relates to a digital communication system. More specifically, the invention relates to a system for recovering a timing of an optimal phase in a full-duplex transmission utilizing data transceivers having arrival signal decision and echo cancellation capabilities.

Description of the Related Art

When a digital signal transmission is performed using a base-band system through an analog signal transmission path, i.e. a twisted-pair cable, the signal is often smoothed and dulled due to an attenuation thereof in the high frequency range and/or a cutting off of a direct current component. This tendency increases in accordance with an increase of the data transmission velocity or the data transmission distance; i.e., the impulse response at the transmission path becomes moderate. In particular, in the base-band transmission, the interference of adjacent pulses, i.e., an interference between codes, associated with a waveform distortion, is a serious problem, and to compensate for this loss of efficiency of the transmission system caused by this interactive interference between codes, and by noise, a filter is usually employed. This filter is generally called a decision feedback equalizer.

The conventional timing clock reproducing system, however, uses a pre-cursor type system which detects a position of the precursor $h_{-1}$, based on the premise that the value of the precursor should be zero, and sets the value at the following cycle period as a peak value of the impulse response. This system, however, has a problem of an occurrence of phase errors when the value of the precursor is not zero. Also, when a plurality of points having zero values exist as the precursor, this system cannot easily and quickly determine the reproducing phase.

Further, when high level noise or near-end crosstalk is superimposed on the received signal, the accuracy required for obtaining an optimal timing reproduction cannot be achieved only by detecting one of the main cursor or precursor.

## SUMMARY OF THE INVENTION

Therefore, an object of the present invention is to provide a system for reproducing an optimal phase timing clock by predicting a value of a precursor $h_{-1}$ by using a decision feedback equalizer having coefficients for an equalization of the precursor $h_{-1}$, and calculating an evaluating function of an impulse response utilizing the predicted value of precursor $h_{-1}$ and a predicted value of a main cursor $h_0$.

According to one aspect of the invention, there is provided a decision feedback type line equalizer which assumes that the instantaneous symbol value is $a_n$, the symbol values of one to N preceding cycles are respectively $a_{(n-1)}$ to $a_{n-N}$, the symbol value of the next cycle is $a_{-1}$, the impulse response sequence corresponding thereto is respectively $h_0$, $h_1$ to $h_N$, and the impulse response of the precursor is $h_{-1}$, and that a receiving signal sample value $X_n$ can be expressed by the following equation due to presence of intersymbol interference:

$$X_n = h_{-1} a_{-1} - h_0 a_n + h_1 a_{n-1} + \dots + h_N a_{n-N}$$

wherein the decision feedback equalizer comprises:

a tap coefficient updating means for deriving equalizing tap coefficients $C_1$ to $C_N$ respectively corresponding to said impulse response sequence $h_1$ to $h_N$ and precursor equalizing tap coefficient $C_{-1}$, and outputting respectively $C_1 a_{n-1} + C_2 a_{n-2} + \dots + C_N a_{n-N}$, based on a residual error predicting intermediate value in a preceding sampling cycle corresponding to a difference between an output and an input of a received symbol determining unit which determines a symbol value of a received signal, a value derived by subtracting a product of the precursor equalizing tap coefficient $C_{-1}$ and a current output of the received symbol determining unit, from the residual error predicting intermediate value, the current received symbol value $a_n$, and the $a_{n-1}$ to $a_{n-N}$;

a subtracting means for deriving a difference between the received sample value and the output of the tap coefficient updating means;

the received symbol determining means receiving an output from the subtracting means and outputting the symbol value of the current received symbol.

According to another aspect of the invention, there is provided a timing clock reproducing system

EP 0 476 487 A2

incorporated in a data transceiver in a digital customer line communication for extracting an optimum phase, which comprises:

a line equalizer for shaping a waveform distorted by a transmission through s cable line;

a PLL circuit;

an analog-to-digital converter got sampling a signal received from the line equalizer at a timing controlled by a sampling timing control signal from the PLL circuit, and converting the received signal to a digital signal;

a decision feedback equalizer receiving a received sample valuesignal output from said analog-to-digital converter and outputting taping coefficients including a taping coefficient $C_{-1}$ for equalizing a precursor and a tap coefficient $C_0$ for a main cursor;

an evaluating function deriving means for receiving the precursor equalizing tap coefficient $C_{-1}$ and said main cursor equalizing tap coefficient $C_0$ to thereby derive an evaluating function for controlling the PLL circuit to thus adjust a sampling timing of the analog-to-digital converter.

According to a further aspect of the invention, there is provided a timing clock reproducing system incorporated in a data transceiver in a digital customer line communication for extracting an optimum phase, which comprises:

a line equalizer for shaping a waveform distorted by a transmission through cable line;

a PLL circuit;

an analog-to-digital converter of sampling a signal received from the line equalizer at a timing controlled by a sampling timing control signal from the PLL circuit, and converting the received signal to a digital signal;

a decision feedback equalizer for receiving a received sample value signal output from the analog-to-digital converter and outputting taping coefficients including a taping coefficient $C_{-1}$ for equalizing a precursor;

an evaluating function deriving means for receiving the precursor equalizing tap coefficient $C_{-1}$, to thereby derive an evaluating function based thereon for controlling the PLL circuit tp thus adjust a sampling timing of the analog-to-digital converter.

According to a still further aspect of the present invention, there is provided a symbol coder for use in a line equalizer incorporated in a data transceiver for communication through a digital customer line using a 2B1Q code for compensating a loss of a transmission through the customer cable line, comprising:

means for defining a first pair of threshold levels (±A) having an absolute value which is greater than 0 and smaller than 1 and a second pair of threshold levels (±B) having an absolute value which is greater than 1 and smaller than 3;

means for detecting an input signal level between the first pair of threshold levels, for setting a received symbol value of the input signal to 0;

means responsive to an input signal having a level greater than a positive value (+A) of the first pair of threshold levels and setting the received symbol value to +1 when the input signal level is smaller than a positive value (+B) of the second pair of threshold levels, and otherwise setting the received symbol value to +3; and

means responsive to an input signal having a level smaller than a negative value (-A) of the first pair of threshold levels and setting the received symbol value to -1 when the input signal level is greater than a negative value (-B) of the second pair of threshold levels, and otherwise setting the received symbol value to -3.

BRIEF DESCRIPTION OF THE DRAWINGS

The present invention can be more fully understood from the detailed description given herebelow and from the accompanying drawings of the preferred embodiments of the invention Note, these specific embodiments are for the purpose of explanation and illustration only and in no way limit the present invention.

In the drawings:

Figs. 1 and 2 are charts showing an impulse response in a transmission line of the prior art;

Figs. 3 and 4 are schematic discrete block diagrams formulated by a Z-conversion of the output signal;

Fig. 5 is a block diagram showing a non-feedback type equalizer employed in the conventional timing clock reproducing system;

Fig. 6 is a schematic block diagram showing an example of data transmission between a station and a terminal, through a digital customer line;

Fig. 7 is a block diagram of the conventional timing clock reproducing circuit;

4

Fig. 8 is a timing chart showing a relationship between the impulse response and the reproduced timing clock;

Fig. 9 is a chart showing the phase control in the reproduced timing clock of the prior art;

Fig. 10 is a schematic block diagram showing the principle of a first embodiment of a timing clock reproducing system according to the present invention;

Fig. 11 is a schematic and conceptual block diagram showing a decision feedback equalizer (DFE) with tap coefficients for an equalization of a precursor;

Fig. 12 is a block diagram of the preferred embodiment of the decision feedback equalizer (DFE) with tap coefficients for the equalization of the precursor;

Fig. 13 is a flowchart showing a preferred process for updating the tap coefficient;

Fig. 14 is a chart showing an updating of the tap coefficient in accordance with a received impulse response waveform;

Fig. 15 is a block diagram of the first embodiment of a timing clock reproducing circuit to be employed in the first embodiment of the timing clock reproducing system according to the present invention;

Fig. 16 is a block diagram similar to Fig. 15 but showing a second embodiment of the timing clock reproducing circuit to be employed in the first embodiment of the timing clock reproducing system of the present invention;

Fig. 17 is a block diagram showing the preferred embodiment of an evaluating function stage;

Figs. 18A and 18B are a flowchart showing a preferred process of a timing clock reproduction in the preferred embodiment of the timing clock reproducing circuit;

Fig. 19 is a block diagram of a third embodiment of the timing clock reproducing circuit to be employed in the first embodiment of the timing clock reproducing system of the invention;

Fig. 20 is a schematic block diagram showing the principle of another embodiment of a timing clock reproducing system;

Fig. 21 is a chart showing a manner for setting an evaluating function in the second embodiment of the timing clock reproducing system of Fig. 20;

Fig. 22 is a schematic and conceptual block diagram showing the decision feedback equalizer to be employed in the second embodiment of the timing clock reproducing system of the invention;

Fig. 23 is a block diagram of the decision feedback equalizer with a tap function, to be employed in the second embodiment of the timing clock reproducing system of the invention for equalizing a precursor;

Fig. 24 is a flowchart showing a process for updating the tap coefficient;

Fig. 25 is a block diagram of the preferred embodiment of the timing clock reproducing circuit to be employed in the second embodiment of the timing clock reproducing system of the invention;

Figs. 26A and 26B are flowchart showing a process of a reproduction of the timing clock in the preferred embodiment of the timing clock reproducing circuit of Fig. 25;

Fig. 27 is a block diagram of a conventional data transceiver;

Fig. 28A and 28B are charts showing waveforms of far-end signals in a digital customer line transmission;

Fig. 29A and 29B are chart showing waveforms of near-end signals in a digital customer line transmission;

Fig. 30 is a schematic and functional block diagram of the preferred embodiment of a symbol coder according to the present invention;

Fig. 31 is an illustration showing the setting of a threshold level for an identification of a received symbol;

Fig. 32 is a flowchart showing a process of identifying a symbol value of the received signal;

Fig. 33 is a schematic and conceptual block diagram of the decision feedback equalizer to be associated with the symbol coder for formulating a part of the timing clock reproducing system of the invention;

Fig. 34 is a block diagram of the preferred construction of the decision feedback equalizer of Fig. 33, which is provided with a tap coefficient for an equalization of a precursor; and

Fig. 35 is a flowchart showing a process for updating a tap coefficient.

## DESCRIPTION OF THE PREFERRED EMBODIMENT

Prior to the explanation of the preferred embodiments of the present invention, a brief discussion of the state of art is given, to facilitate a better understanding of the presnt invention.

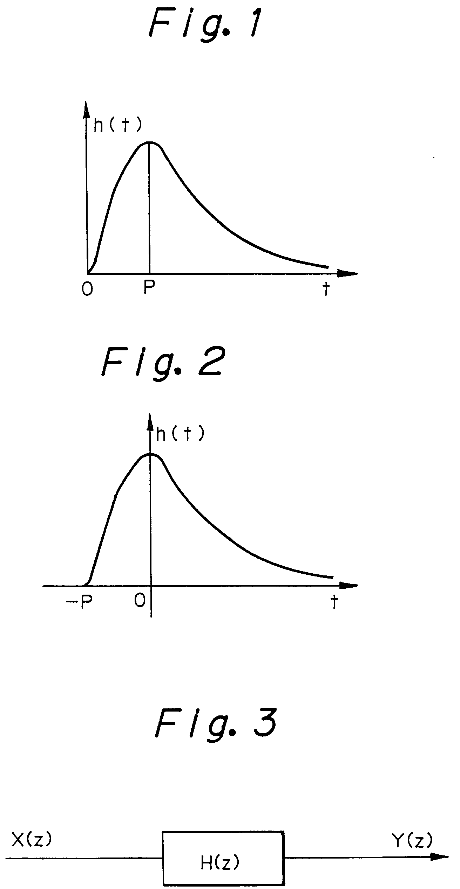

Figures 1 and 2 show examples of impulse responses in a twisted-pair cable. As can be seen from these figures, in the communication system, the level of the impulse response h(t) is maintained at zero (0) until the occurrence of a leading edge of the pulse at a time t-0, as shown in Fig. 1. As an alternative, often the timing is shifted along the time axis to set $t = 0$ at the occurrence of the peak of the pulse, as shown in Fig. 2.

In general, an output in a transmission system at a timing n with respect to constant cycle time sequence inputs $a_0$, $a_1$, ... $a_n$ can be predicted by the following equation, utilizing an impulse response sequence $h_0$, $h_1$, ... $h_n$ of the system.

$$y(n) = \sum_{i=1}^{n} a_{n-1} h_i$$

$$\ldots \ldots (1)$$

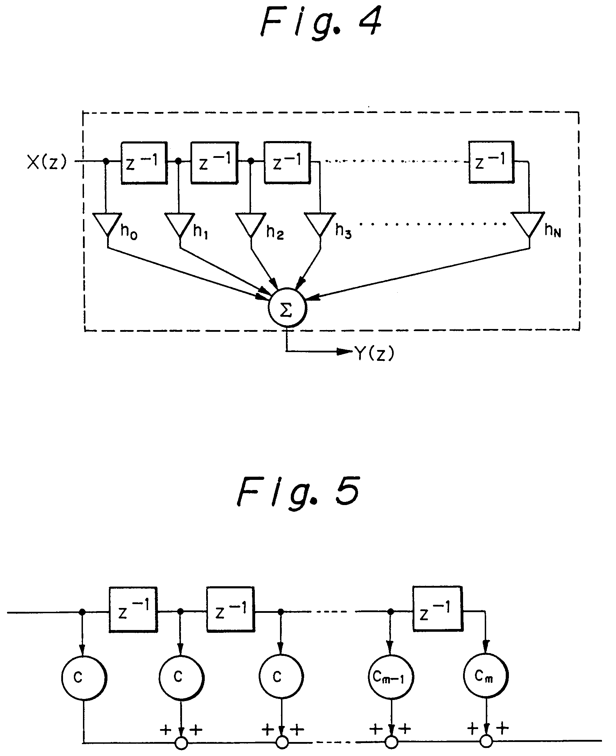

Figures 3 and 4 are diagrammatic illustrations of a finite impulse response (FIR) filter utilizing a Z conversion.

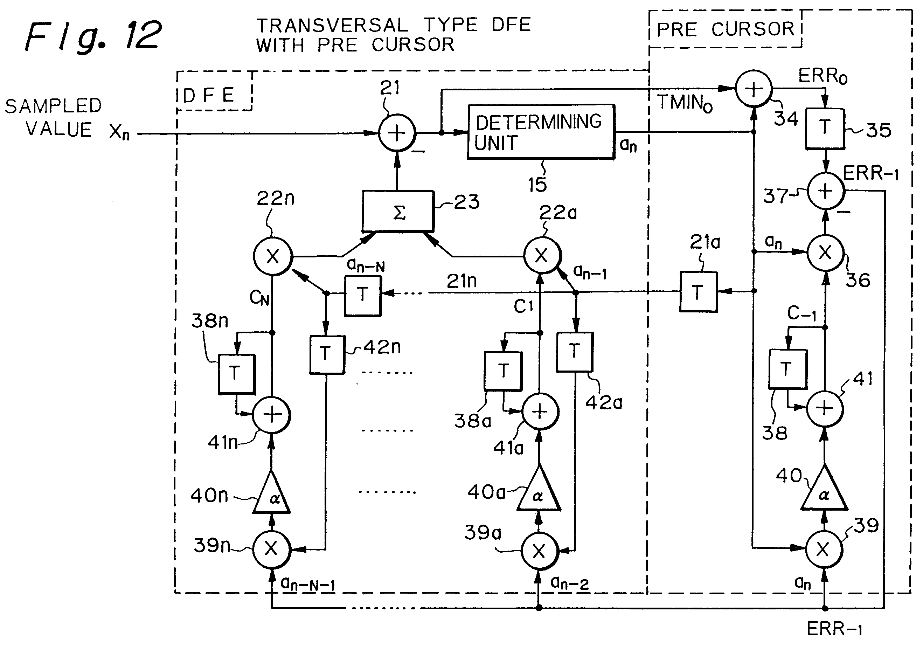

Figure 5 shows a non-feedback type equalizer (transversal filter which compensates for a does of efficiency of the transmission system of Fig. 12. In the shown equalizer, tap coefficients $C_0$, $C_1$, ... are employed in place of the impulse response sequence $h_0$, $h_1$, .... In such an equalizer, blocks $Z^{-1}$ are implemented by shift registers for realizing a one cycle delay of the input signal sequence.

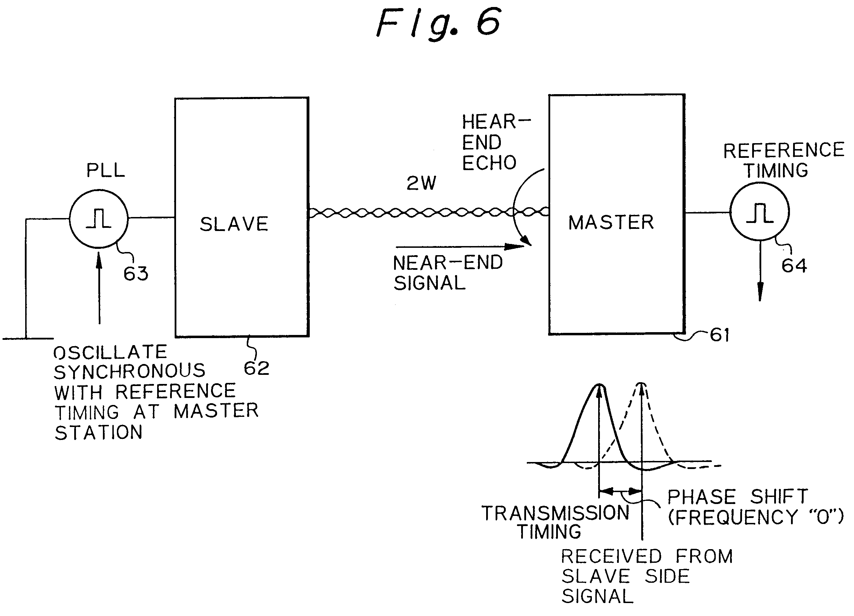

Figure 6 shows an example of a transmission between a station and a terminal, through a customer digital line. At the station 61 (master side), a timing clock reproduction is performed solely by taking a phase shift due to a delay caused by the transmission line and/or the circuit per se, regardless of the frequency error, since the data is transmitted from the terminal 62 (slave side) in synchronism with a reference timing clock generated by a reference timing clock generator 64 in the master side, by a phase locked loop (PLL) circuit 63.

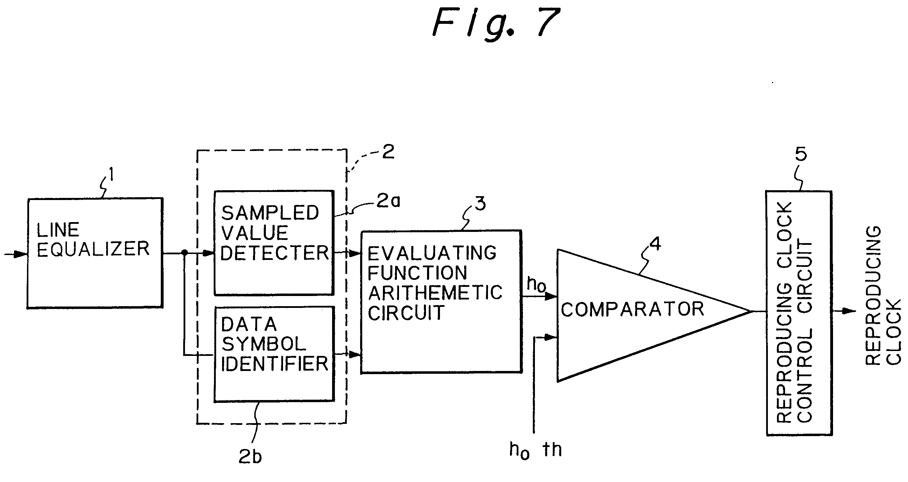

Figure 7 shows a conventional timing reproducing circuit for generating a reproduced timing close to an optimal phase by detecting a peak value of the received signal. The shown circuit includes a line equalizer 1 which performs a shaping of a waveform of the received signal and so forth. The received signal is fed through the line equalizer 1 to a circuit 2, which is provided with a sample value detector 2a and a data symbol identifier 2b. The sample value detector 2a detects a sampled value corresponding to y(n), which is expressed by a convolution form in the foregoing equation (1), and the data symbol identifier 2b identifies symbolic values $a_0$, $a_1$, ... $a_n$ of the received signals. The sampled value and the data symbol are fed to a evaluating function arithmetic circuit 3, and the arithmetic circuit 3 processes the inputs from the sample value detector 2a and the data symbol identifier 2b and outputs a predicted value of the peak value $h_0$ of the impulse response.

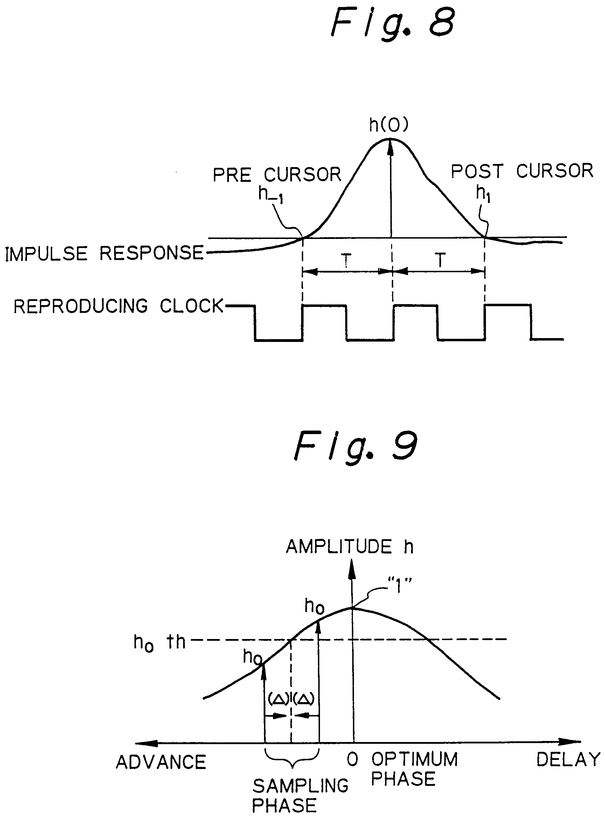

Once the peak value $h_0$ of the impulse response is properly detected, the timing clock with the optimal phase, as shown in Fig. 8 is reproduced. Note, in Fig. 8, when the peak value $h_0$ of the impulse response is properly detected, the impulse response value at the immediately preceding cycle is called a precursor $h_{-1}$, and that of the immediately following cycle is called a postcursor $h_1$. Ideally, the impulse response values of both the precursor $h_{-1}$ and the postcursor $h_1$ are zero (0).

In Fig. 7, the predicted peak value $h_0$ of the impulse response as the output of the evaluating function arithmetic circuit 3 is fed to a comparator 4, and the comparator 4 also receives a predetermined threshold value $h_{0th}$, which is smaller than "1", the comparator 4 compares these inputs, to enable a reproducing clock control circuit 5 to control the phase of the reproduced timing clock. As shown in Fig. 9, the phase of the reproduced timing clock is advanced when the predicted peak value $h_0$ is greater than the threshold value $h_{0th}$, and delayed when the predicted value is smaller than the threshold value, and thus the phase of the reproduced timing clock is adjusted to approach the optimal phase by adjusting the threshold value so that the predicted peak value approaches "1" at the optimal phase (0).

In the peak detection type timing clock reproducing circuit of Fig. 7, however, a problem is encountered in that, when the value of the precursor $h_{-1}$ is not zero, such a precursor can cause interference of codes which cannot be eliminated by the line equalizer and so forth, to thereby cause an error in the determination made by the data symbol identifier.

As another conventional timing reproducing system, a precursor type is known. In this system it is assumed that the precursor $h_{-1}$ is zero, and the position of the precursor is detected, and the peak position of an impulse response is determined at a position later than the precursor position by one cycle. This system, however cannot accurately predict the precursor $h_{-1}$ when the interference of the codes is large. Namely, the precursor $h_{-1}$ is not always zero in practice. Therefore, the peak position cannot be accurately predicted, causing a problem in that the timing reproduction becomes impossible. Further, when a plurality of precursors are zero, the phase to be reproduced cannot be determined.

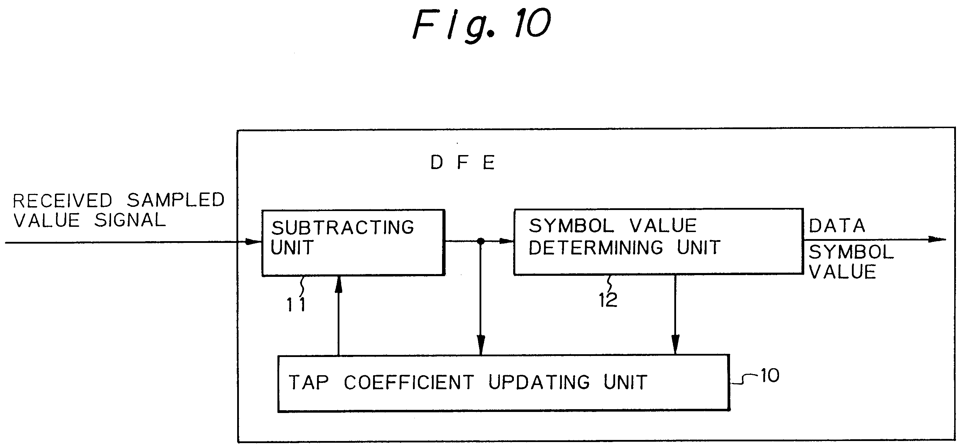

Referring now in particular to Fig. 10, the principle of the first embodiment of a timing clock reproducing system according to the present invention is illustrated. This comprises a decision feedback equalizer with coefficients for an equalization of a precursor which receives signal sample values which can be expressed by $x_n = h_{-1}a_{-1} + h_0a_n + h_1a_{n-1} + ... h_Na_{n-N}$, assuming that the current value of the transmitted code is $a_n$, the transmitted code values during one to N preceding cycles are respectively $a_{n-1}$ to $a_{n-N}$, the transmitted code value after one cycle is $a_{-1}$, and the impulse response sequence is $h_0$, $h_1$ to $h_N$.

In Fig. 10, the tap coefficient updating unit 10 in the decision feedback equalizer delays a current residual error indicating a difference between an input and output of a symbol value determining unit 12 used for identifying the symbol value of the current received signal, over one cycle. The tap coefficient updating unit 10 also sets in the next cycle, the delayed residual error as an intermediate value for a prediction of a residual error of one future cycle. The tap coefficient updating unit 10 subtracts a product of a precursor equalizing tap coefficient $c_{-1}$ and the output $a_n$ of the current symbol value determining unit 12 from the intermediate value. The tap coefficient updating unit 10 updates the equalization tap coefficients $C_1$ to $C_N$ in the decision feedback equalizer and respectively corresponding to the foregoing impulse response sequence $h_1$ to $h_N$, and updates the precursor equalizing tap coefficient $C_{-1}$, using the result of the foregoing substraction and the outputs $a_n$, $a_{n-1}$, $a_{n-N-1}$ of the symbol value determining unit 12, to output $C_1a_{n-1} + C_2a_{n-2} + ... C_Na_{n-N}$. This output can be derived as an overall total of products $a_{n-1}$, $a_{n-2}$, ... $a_{n-N}$ as resultant values obtained by replacing code values of respective cycles with the output $a_n$ of the symbol value determining unit 12, and respective of the tap coefficients $C_1$ to $C_N$, for example.

Further, a subtracting unit 11 derives a difference between the received signal sample value as the input for the decision feedback equalizer and the outputs of the tap coefficient updating unit 10, and the symbol value determining unit 12 outputs the symbol value of the current received codes based on the output of the subtracting unit 11.

In the construction as set forth above, the decision feedback equalizer receives the received signal sample value $X_n = h_{-1}a_{-1} + h_0a_n + n_1a_{n-1} + ... h_Na_{n-N}$ which is a convolution of the current value $a_n$ of the transmitted code, the code values $a_{n-1}$ to $a_{n-N}$ of the one to N cycle preceding cycles, and the code value $a_{-1}$ after one cycle. To accurately determine the symbol value $a_n$ of the current received code, it is necessary to identify the received data symbol by setting all of the terms to zero, except for the term $h_0a_n$, in the received signal sample value $X_n$.

Nevertheless, the term including the precursor $h_{-1}$ is determined by a transmitted code value occurring at one cycle later in time, and therefore, cannot be predicted. Therefore, the currently determined received symbol is taken as the received symbol identification value of one preceding cycle to thereby be delayed for one cycle. Similarly, the current residual error as the difference between the output of the symbol value determining unit 12 and the input received signal sample value, is taken as the intermediate value for a prediction of the residual error in the preceding cycle, to thereby be delayed for one cycle. The tap coefficients are thus updated by using these values and the tap coefficient $C_{-1}$ for equalizing a precursor.

In Fig. 10, when the residual error becomes zero, the impulse response sequence $h_1$ to $h_N$ coincides with the tap coefficients $C_1$ to $C_N$. Therefore, by presetting $C_0$ to "1", the input for the symbol value determining unit 12 becomes approximately $C_{-1}a_{-1} + a_n$. Assuming that the output of the symbol value determining unit, i.e., the result of the determination is $a_n^*$, the the intermediate value for predicting the residual error can be expressed by $C_{-1}a_n + a_{n-1} - a_{n-1}^*$, and therefore, the resultant value $a_{n-1} - a_{n-1}^*$ (approximated value) of the subtraction is taken as the final residual error, and thus an update of the tap coefficients $C_{-1}$ and $C_1$ to $C_N$ is performed so that the residual error approaches zero.

When the residual error ideally becomes zero, the tap coefficient $C_{-1}$ coincides with the precursor $h_{-1}$, and thus the input for the symbol determining unit becomes $h_{-1}a_{-1} + a_n$. Therefore, for example, by setting the precursor $h_{-1}$ to zero in the calculation of the evaluating function for the impulse response, the input for the symbol determining unit exactly matches the current transmitted symbol value $a_n$. The processes set forth above, enables the prediction of the precursor $h_{-1}$ in the shown embodiment.

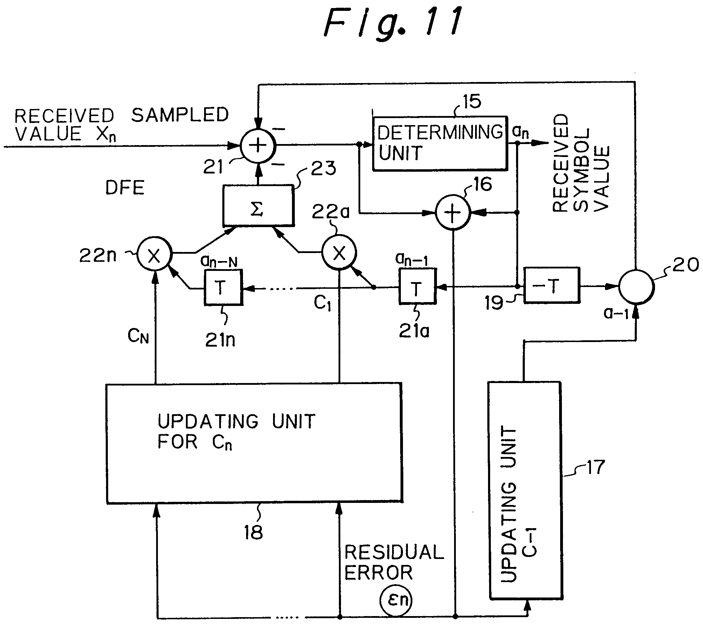

Figure 11 shows the principle of the decision feedback equalizer to be employed in the shown embodiment of the timing clock reproducing system according to the present invention. The decision feedback equalizer (DFE) receives a received signal sample value $X_n$ and outputs a currect received symbol value $a_n$.

In Fig. 11, a subtractor 16, subtracts an input from a subtractor 21, which will be discussed later, from the output of a determining unit 15, and the difference thus derived by the subtractor 16 is used as a residual error for updating the tap coefficients. The residual error is fed to an updating unit 17 for the precursor equalizing tap coefficient $C_{-1}$ and an updating unit 18 for updating other tap coefficients $C_n$ (n =

1 to N).

Also, the output of the determining unit 15 is delayed for a delay period -T by a -T delay unit 19, i.e., the time is advanced for one cycle period T, and therefore, the delayed output of the -T delay unit 19 is taken as $a_{n+1}$. The value $a_{n+1}$ thus derived is multiplied with the tap coefficient $C_{-1}$ output from the tap coefficient updating unit 17, by a multiplier 20, and the output of the multiplier 20 indicating the product of $a_{n+1}$ and $C_{-1}$ is fed to a subtractor 21.

The output $a_n$ of the determining unit 15 is also input to T delay units 21a, ..., and 21n, so that it may be taken as symbol values $a_{n-1}, ... a_{n-N}$ of one to N preceding cycles. The respective symbol values $a_{n-1}$ to $a_{n-N}$ are multiplied with respectively associated tap coefficients $C_1$ to $C_N$ by multipliers 22a, ... 22n, and the products thus derived at the respective multipliers 22a, ..., and 22n are summed by an adder 23. The sum thus derived by the adder 23 is fed to the subtractor 21, and the subtractor 21 subtracts the sum value from the adder 23 and the output value of the multiplier 20 from the input receiving sample value $X_n$. The result of subtraction in the subtractor 21 is fed to the determining unit 15 and the subtractor 16 for the process set forth above.

Accordingly, when the impulse response sequence $h_{-1}$ and $h_1$ to $h_N$ coincide with respectively associated tap coefficients $C_{-1}$ and $C_1$ to $C_N$, the input for the determining unit 15 becomes only $h_0 a_n$, and therefore, by setting $h_0$ to "1", the determining unit 15 can output the accurate receiving symbol value.

Although the decision feedback equalizer illustrated in Fig. 11 is designed to predict the symbol to be received in the following cycle, and the predicted value is taken as the predicted value of the precursor $h_{-1}$ to be multiplied by the tap coefficient $C_{-1}$, the implementation of such a system for predicting the symbol to be received in the future is practically not possible.

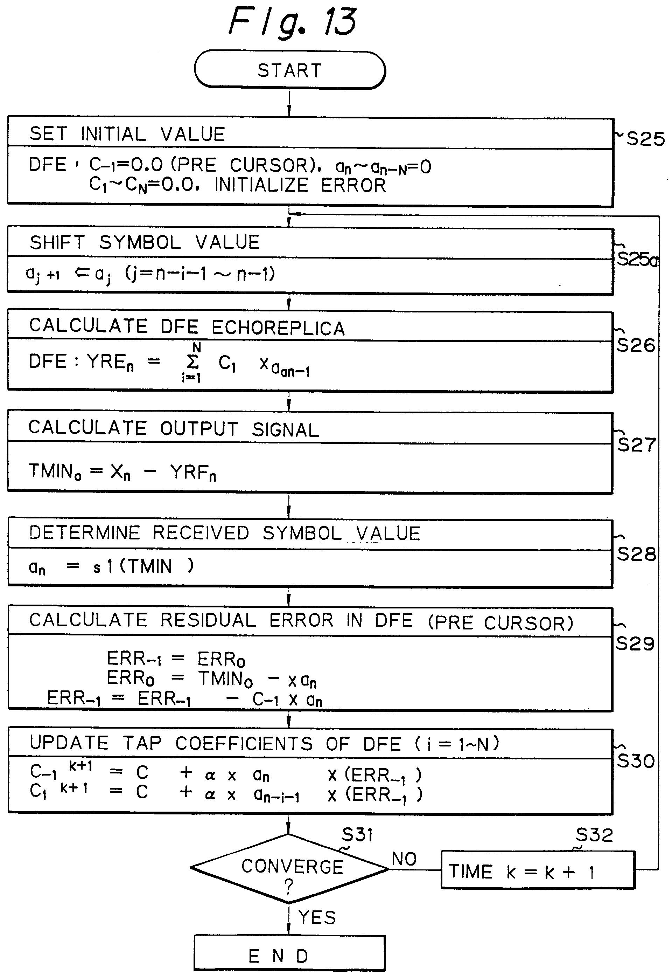

Figure 12 shows a practical embodiment of the decision feedback equalizer for implementing the first embodiment of the timing clock reproducing system of the invention. The practical implementation of the decision feedback equalizer will be discussed below with reference to Fig. 12 and Fig. 13, which shows a flowchart illustrating a practical process for updating tap coefficients.

In Fig. 12, the components common to the construction of Fig. 11 will be represented by the same reference numerals, and thus a detailed discussion thereof omitted to avoid redundant explanations and simplify the disclosure.

The output $a_n$ of the determining unit 15 is fed to a subtractor 34. The subtractor 34 also receives an input from the subtractor 21, which input is a $TMIN_0$ register value. The subtractor 34 derives a difference between the outputs of the determining unit 15 and the subtractor 21, and outputs an error indicating the derived difference to a T delay unit 35, which provides a delay T corresponding to one cycle. The delayed error from the T delay unit 35 is taken as the intermediate value for predicting the residual error in the preceding cycle, and this intermediate value, as the output of the T delay unit 35, is fed to a subtractor 37. The subtractor 37 also receives a product derived by multiplying the output $a_n$ of the determining unit 15 by the precursor equalizing tap coefficient $C_{-1}$, by a multiplier 36. The subtractor 37 subtracts the product output from the multiplier 36 from the intermediate value output from the T delay unit 35 to derive the residual error $ERR_{-1}$, and utilizing this residual error $ERR_{-1}$, the tap coefficients are updated.

The output $a_n$ of the determining unit 15 is also fed to the T delay units 21a, ..., and 21n, respectively and in order. From the respective T delay units 21a, ..., and 21n, delayed outputs as symbol values $a_{n-1}, ... a_{n-N}$ of one to N preceding cycles are multiplied with respectively associated tap coefficients $C_1, ... C_N$, by the multipliers 22a, ..., and 22n, and the products output from these multipliers 22a, ..., and 22n are summed by the adder 23, and the sum obtained is input to the subtractor 21 as an echo replica. The subtractor 21 subtracts the sum from the adder 23, from the input receiving sample value $X_n$.

Accordingly, the impulse response sequence $h_{-1}$ and $h_1$ to $h_N$ coincides with the respectively corresponding tap coefficients $C_{-1}$ and $C_1$ to $C_N$ at the receiving sample value $X_n$, and therefore, for example, when $h_{-1}$ is zero, the input for the determining unit 15 becomes solely $h_0 a_0$. Therefore, by setting $h_0$ to "1", the determining unit 15 can output an accurate received symbol value.

Other components in the preferred embodiment of the decision feedback equalizer of Fig. 12 will be discussed in conjunction with the process of updating the tap coefficient, with reference to Fig. 13.

Initially, at step S25 of Fig. 13, the respective tape coefficients $C_{-1}$, $C_1$ to $C_N$ are set to an initial value, i.e., zero. Also, at step S25, the intermediate value $ERR_0$ for predicting the residual error is set to a predetermined initial value; this initial value of the intermediate value $ERR_0$ is preferably a reasonably large value. Then the received symbol values $a_j$ (j = n - i - 1 to n - 1) are respectively shifted to $a_{j+1}$ for the current processing cycle, at step S25a, and at step S26, the echo replica $YRF_n$ of the decision feedback equalizer is calculated. The process in step S26 is carried out by the adder 23 of Fig. 11.

At step S27, the $TMIN_0$ register value for evaluating the function unit is calculated by subtracting the echo replica $YRF_n$ from the input received sample value $X_n$. The process at the step S27 is carried out by

EP 0 476 487 A2

the subtractor 21. At step S28, a determination of the received symbol value 15 is effected. Here, it is assumed that four received symbol values are available e.g. ±1 and ±3. Then, the received symbol is determined by utilizing slice levels of +2, 0 and -2.

At step S29, the residual error of the equalizer is processed. Namely, the current residual error value $ERR_0$ registered in a residual error register is shifted to $ERR_{-1}$ representing the residual error in the preceding cycle. This is done by obtaining a delay time from the T delay unit 35, as set forth above. Thereafter, a new current residual error $ERR_0$ is derived by deriving a difference between the output of the determining unit 15 and the $TMIN_0$ register value in the subtractor 34, and then the product of the precursor equalizing tap coefficient $C_{-1}$ and the output of the determining unit 15, as calculated by the multiplier 36, is subtracted from the residual error $ERR_{-1}$ provided from the T delay unit 35, by the subtractor 37, and accordinginly, the final value of the residual error $ERR_{-1}$ is derived. The tap coefficients are updated at step S30 by utilizing this final residual error $ERR_{-1}$.

The precursor equalizing tap coefficient $C_{-1}$ is delayed for one cycle by a T delay unit 38, and the delayed tap coefficient $C_{-1}$ is supplied to an adder 41. The adder 41 also receives a product derived by multiplying a product of the output of the determining unit 15 and the residual error $ERR_{-1}$ from a multiplier 39, by a relatively small negative constant $\alpha$ at a coefficient multiplier 40. The adder 41 derives a sum of the delayed tap coefficient $C_{-1}$ and the product from the coefficient multiplier 40, and this sum serves as an updating value for the tape coefficient $C_{-1}$.

Note, in Fig. 13, all of $C_{-1}$, $C_1$ to $C_N$, $YRF_n$, $a_n$ and so forth are function units of the tap coefficient updating time, and therefore can be expressed for example, in the form of $C_{-1}^k$. Also note, throughout the disclosure, $k$ is neglected, for simplification.

The other tap coefficient is updated in the same or a similar manner as that set forth above. For example, the tap coefficient $C_1$ is delayed by a T delay unit 38a for one cycle, and the delayed tap coefficient $C_1$ is supplied to an adder 41a. The adder 41a also receives a product derived by multiplying a product of the delayed output $a_{n-2}$ of the determining unit 15, which output is delayed for two cycles by the delay unit 21a and a T delay unit 42a, and the residual error $ERR_{-1}$ from a multiplier 39a, by a relatively small negative constant $\alpha$ at a coefficient multiplier 40a. The adder 41a derives a sum of the delayed tap coefficient $C_1$ and the product from the coefficient multiplier 40a, and this sum serves as an updating value for the tape coefficient $C_1$.

In Fig. 4, once the updating of the taping coefficients is completed at step S30, then convergence determination is performed at step S31. In the process of the convergence determination, it is determined that a satisfactory convergence is obtained when the residual error $ERR_{-1}$ becomes smaller than a predetermined threshold value. If the residual error $ERR_{-1}$ is not smaller than the threshold value, the timing for performing an update of the tap coefficient is modified from $k$ to $k + 1$, to thereby repeat the process of step S26 and the subsequent steps.

Note, the period required for obtaining a satisfactory convergence in the residual error must be shorter than the interval between the adjacent sampling timings. Therefore, the cycle of $k$, which represents the timing of the updating of the taping coefficient, must be much shorter than the sampling period or cycle T.

In Fig. 12, all of the delays for the receiving symbol values are provided for the period corresponding to the sampling cycle period T, but in the practical algorithm, a delay is provided by replacing $ERR_{-1}$ with $ERR_0$ at step S29 of Fig. 13, and therefore, the delay for a sampling cycle period T is not actually performed.

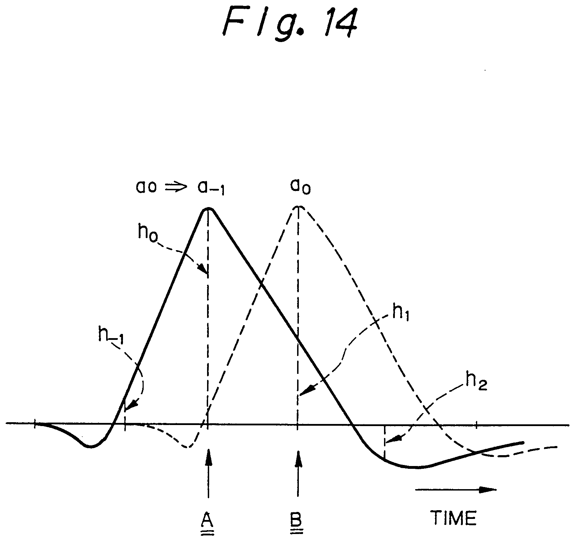

Figure 14 shows the of updating of the tap coefficient by the received impulse response waveform. As seen from this figure, the impulse response having a peak value at a time A includes the precursor of the impulse response having a peak value at one cycle later timing, i.e. a time B. The present invention utilizes the phenomenon that, when the decision feedback equalizer converges, the impulse response sequence $h_{-1}$, $h_1$ to $h_N$ coincides with the respective associated tap coefficients $C_{-1}$, $C_1$ to $C_N$.

First, at time A, the echo replica $YRF_0$ of the decision feedback equalizer is calculated, and then at time A, $TMIN_0$ is calculated. At time B, the determined the received symbol value is determined with the $TMIN_0$ which includes the precursor $h_{-1}$, and the product of the received symbol value and the precursor equalizing tap coefficient $C_{-1}$, is subtracted from the residual error $ERR_{-1}$ to thereby update the $ERR_{-1}$.

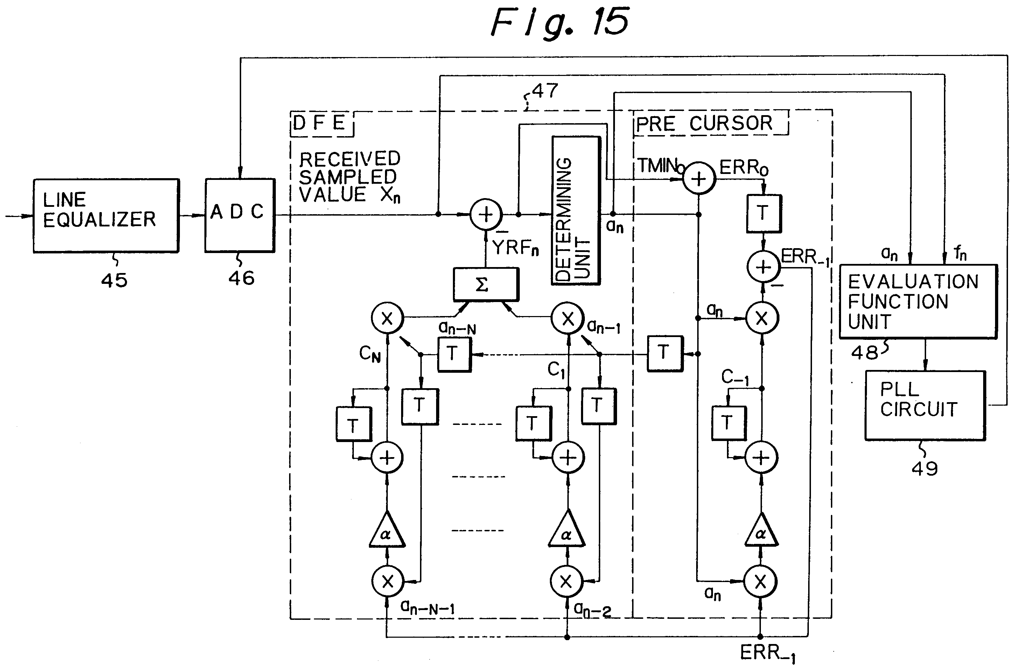

Figure 15 shows the first preferred embodiment of the taming clock reproducing circuit employing the decision feedback equalizer including the precursor equalizing tap coefficient. A line equalizer 45 shapes a received signal distorted through the transmission line and adjusts a peak value thereof to a predetermined value, e.g., "1". An analog-to-digital converter (ADC) 46 samples the output of the line equalizer 45, utilizing a sampling timing control signal output from the PLL circuit 49, and converts the received signal to a digital signal. The decision feedback equalizer (DFE) 47 with the precursor equalizing tap coefficient is identical to that illustrated with reference to Fig. 12. An evaluating function unit 48 calculates the evaluating function for

9

modifying the sampling timing control signal to be output from the PLL circuit 49, using the received signal $X_n$ output from the ADC 46 and the received data symbol value $a_n$ output from the determining unit 15 in the DFE 47.

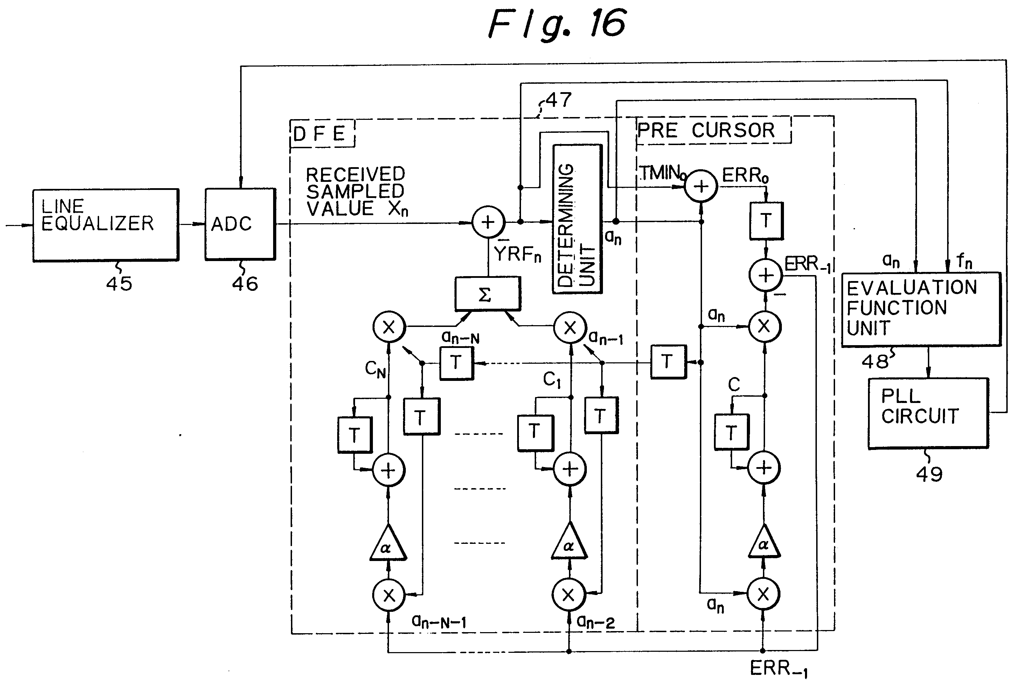

Figure 16 shows a second preferred embodiment of the timing clock reproducing circuit according to the present invention. The timing clock reproducing circuit in this embodiment has same construction as in the foregoing first embodiment of Fig. 15, except for the imput an of the evaluating function unit 48. Namely, the input signal for the determining unit 15 of the DFE 47, i.e., the signal excluding intersymbol interference except for the term of the precursor $h_{-1}$, is input to the evaluation function unit 48, instead of inputting the receiving signal sample value $X_n$.

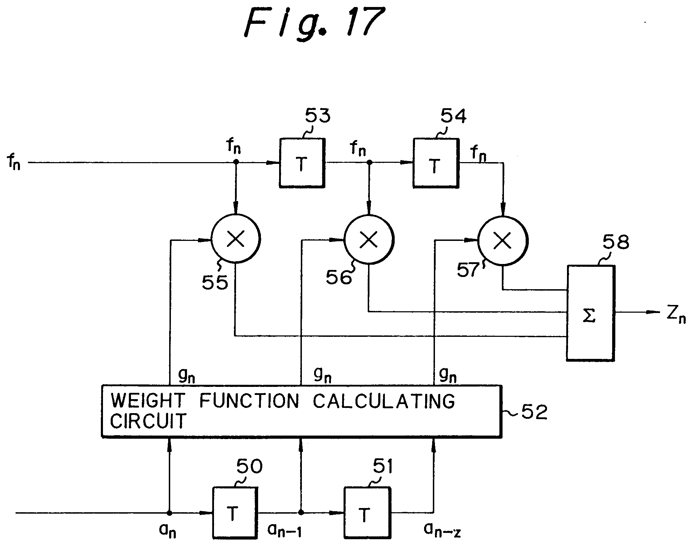

Figure 17 shows a preferred construction of the evaluating function unit 48 in the first and second preferred embodiments of the timing clock reproducing circuits of Figs. 15 and 16. For an easy understanding, the following discussion will be made with respect to the case in which the value N is assumed to be 2 in the received signal sample value $X_n$. In Fig. 16, the received data symbol $a_n$ output from the determining unit 15 of the DFE 47 of Figs. 15 and 16 is input to delay units 50 and 51, in sequence, and $a_n$, $a_{n-1}$, and $a_{n-2}$ are input to a weight function unit calculating circuit 52.

Further, the input signal for the evaluating function unit 48, which is the received signal sample value $X_n$ in the embodiment of Fig. 15, and is the input signal for the determining unit 15 in the embodiment of Fig. 16, is supplied as $f_n$. The input $f_n$ for the evaluating function unit 48 is supplied to delay units 53 and 54 respectively, and the input $f_n$ and delayed inputs $f_{n-1}$ and $f_{n-2}$ are respectively multiplied with outputs $g_n$, $g_{n-1}$ and $g_{n-2}$ of the weight function unit calculating circuit 52 by respective multipliers 55, 56 and 57. The outputs of the multipliers 55, 56 and 57 are added in an adder 58, and as a result, an evaluating function $Z_n$ is obtained.

In Fig. 17, as stuted above, assuming N = 2, the impulse response y(n) and the evaluating function unit $Z_n$ are expressed by the following equations:

$$y_n = X_n = h_0 a_n + a_{nc_1} + h_1 a_{n-1} + h_2 a_{n-2}$$

$$\cdots \quad (2)$$

$$Z_n = g_n f_n + g_{n-1} f_{n-1} + g_{n-2} f_{n-2} \quad (3)$$

By using the above expressions (2) and (3), Zn can be expressed as:

$$Z_n = (h_0 \ h_1 \ h_2) \begin{pmatrix} a_n & a_{n-1} & a_{n-2} \\ a_{n-1} & a_{n-2} & a_{n-3} \\ a_{n-2} & a_{n-3} & a_{n-4} \end{pmatrix} \begin{pmatrix} g_n \\ g_{n-1} \\ g_{n-2} \end{pmatrix}$$

$$\cdots \quad (4)$$

Here, assuming that the coefficients with $h_1$ and $h_2$ are zero, for predicting the peak value $h_0$, the following equation can be established:

$$\begin{pmatrix} a_n & a_{N-1} & a_{n-2} \\ a_{n-1} & a_{n-2} & a_{n-3} \\ a_{n-2} & a_{n-3} & a_{n-4} \end{pmatrix} \begin{pmatrix} g_n \\ g_{n-1} \\ g_{n-2} \end{pmatrix} = \begin{pmatrix} 1 \\ 0 \\ 0 \end{pmatrix}$$

$$\cdots \quad (5)$$

Thus, by appropriately determining the outputs $g_n$, $g_{n-1}$ and $g_{n-2}$ of the weight coefficient calculating circuit 52, the peak value can be accurately determined.

The peak detecting type evaluating function can be more generally expressed by the following equation:

$$Z_n = \frac{E[a_n \cdot f_n]}{E[a_n^2]}$$

$$\ldots \quad (6)$$

Here, $E[a_n]$ is an expected value of $a_n$, and can be an average value of $a_n$. Further, $E[a_n^2]$ can be a dispersion of $a_n$. $E[a_n]$ and $E[a_n^2]$ are expressed by the following equations:

$$E[a_n] = \frac{\sum_{n=0}^{N-1} a_n}{N}$$

$$\ldots \ldots \quad (7)$$

$$E[a_n^2] = \frac{\sum_{n=0}^{N-1} a_n^2}{N} = \sigma'$$

$$\ldots \ldots \quad (8)$$

In the above equation (8), $a_n$ is a random value and the average is set as zero.

In the foregoing equation (6), assuming that

$$y_n = f_n = h_{-1} a_{-1} + h_0 a_n + h_1 a_{n-1} \ldots + h_n a_{n-N} \quad (9)$$

then the following expression can be obtained:

$$a_n y_n = h_{-1} a_{-1} a_n + h_0 a_n^2 + h_1 a_n a_{n-1} + \ldots + h_N a_n a_{n-N}$$

$$\ldots \ldots \quad (10)$$

Here, further assuming that the symbol $a_n$ is not correlated in time and is random, then, in general,

$$E[a_n a_{n-1}] = 0 \quad (11)$$

can be established. As a result,

$$E[a_n y_n] = E[h_{-1}a_{-1}a_n] + E[h_0 a_n^2] + E[h_1 a_n a_{n-1}] + \ldots \ldots + E[h_0 a_n a_{n-N}] = E[h_0 a_n^2] = h_0 E[a_n^2] =$$

$$\ldots \ldots (12)$$

is established, and accordingly, the evaluating function can be expressed by:

$$Z_n = \frac{h_0 \sigma^2}{\sigma^2} = h_0$$

$$\ldots \ldots (13)$$

As can be seen, the evaluation function $Z_n$ coincides with the peak value. Therefore, as set forth above, by comparing $Z_n$ with a given threshold value, the value of $Z_n$ can be adjusted by advancing the phase when $Z_n$ is greater than the threshold value, and by delaying the phase when $Z_n$ is smaller than the threshold value.

Next, the precursor type evaluating function can use

$$y(\tau) = h(t-\tau) - h(t+\tau) \quad (14)$$

as timing extraction information, and in this case, $Z_n$ can be expressed by the following equation:

$$Z_n = E[a_n f_{n-1} - a_{n-1} f_n] \quad (15)$$

In the foregoing equation (15),

$$a_n f_{n-1} = h_{-1}a_n^2 + h_0 a_n a_{n-1} + \ldots \ldots + h_N a_n a_{n-N-1}$$

$$\ldots \ldots (16)$$

$$a_{n-1} f_n = h_{-1}a-1an-1 + h_0 a_n a_{n-1} + h_1 a_{n-1}^2 + \ldots \ldots$$

$$\ldots \ldots (17)$$

The expected values of the equations (16) and (17) can be expressed similarly to the foregoing equation (12), and the evaluating function unit of the equation (15) can be expressed by:

$$Z_n = h - 1\sigma^2 - h_1\sigma^2 = (h_{-1} - h_1)\sigma^2 \quad (18)$$

By determining the value of $\tau$ of the foregoing equation (14) for making the value of the equation (18) zero, the timing clock reproduction can be performed at the optimum timing.

Furthermore, when

$$y(\tau) = h(t-\tau) \quad (19)$$

is used as timing extracting information, the precursor type evaluating function can be expressed by the following equation:

$$Z_n = E[a_n f_{n-1}] \quad (20)$$

From the foregoing equation (16), $Z_n$ can be expressed by:

$$Z_n = h_{n-1}\sigma^2 \quad (21)$$

By determining the $\tau$ for making this equation zero, i.e., making the precursor $h_{-1}$ per se zero, it becomes possible to perform timing clock reproduction at the optimum phase.

As set forth above, in the first embodiment of the timing clock reproducing circuit of Fig. 15, the receiving data sample value $X_n$ becomes the $f_n$ input for the evaluating function unit. In contrast, in the second embodiment of the timing clock reproducing circuit of Fig. 16, $TMIN_0$ as the input for the determining unit becomes the $f_n$ input. In the peak detection type evaluating function unit, $TMIN_0$ is used as the $f_n$ of the equation (6), and in the precursor type evaluating function unit, $TMIN_0$ is used as $f_n$ and $TMIN_{-1}$ is used as $f_{n-1}$.

As shown by the general principle of the first embodiment of the timing clock reproducing system with reference to Fig. 10, the inputs for the determining unit 12 in Fig. 10 and the determining unit 15 in Fig. 12 become $h_{-1}a_{n+1} + a_n$ when the residual error becomes zero. In the precursor type evaluating function unit, the input for the determining unit becomes $a_n$. When the equation (15) is used, however, since $h_1$ is made to approach zero by the function unit of the DFE, the $h_{-1}$ can be converged to zero. Further, in the peak detection type, a certain degree of tolerance can be allowed when a determination is made using the slice levels of -2, 0 and +2 with respect to the symbol values in a range of ±1 and ±3. Therefore, at a convergence of the DFE, the value of $C_{-1}$ becomes approximately zero, and thus there are no serious difficulties in determining the received symbol value.

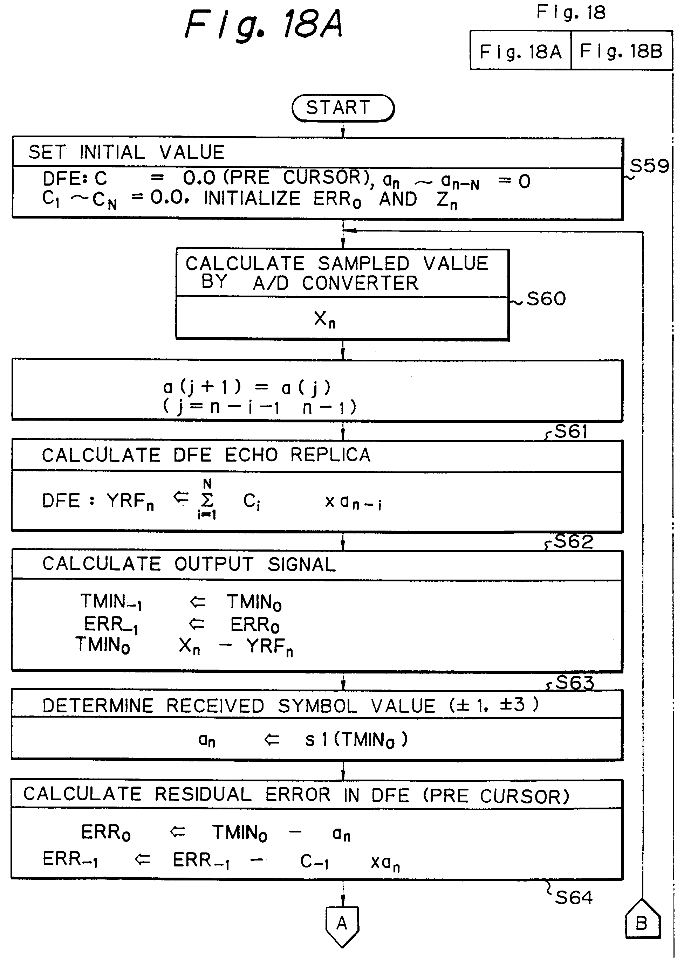

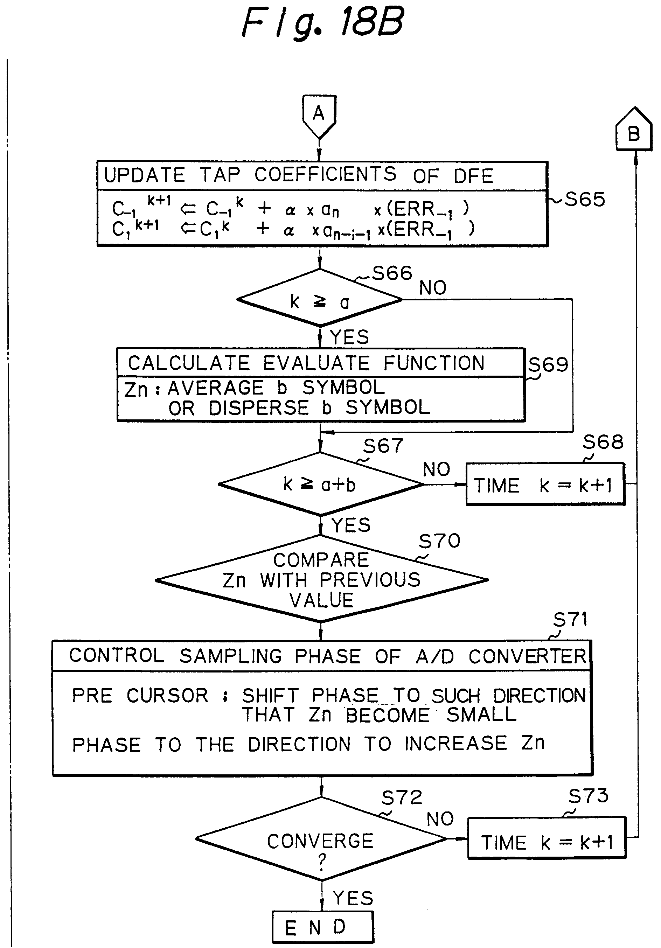

Figure 18 is a flowchart showing the process of the timing clock reproduction. In the process of Fig. 18, the processes at steps S59 to S65 are essentially the same as in the steps S25 to S30 of Fig. 13, but the shown process is different from the process of Fig. 13 in that, at step S59, the initial value to be compared with the evaluating function unit $Z_n$ is set to a large value relative to the precursor type evaluating function but is set to zero for the peak detection type evaluating function. Also, the shown process is different from the former process in that, at step 60, the calculation of the received signal sample value is performed by the analog-to-digital converter 46 of Figs. 15 and 16, and at step S62, the current $TMIN_0$ is set to a value of $TMIN_{-1}$ of the preceding cycle.

Similar to the foregoing process in Fig. 13, after the completion of the updating of the tap coefficients at step S65, it is determined whether the number k of the updating of the tap coefficients is greater than a predetermined value a. The value a is set on the order of several hundreds to several thousands, and when it is determined at step S66 that k is smaller than the given value a, a further check is performed at step S67 to determine whether k is greater than a sum of the given value a and a given value b. In this case, since k is smaller than a, the answer at step S67 is necessarily negative. Then, at a step S68, the value k is incremented, and thereafter, the process from step S60 is repeated.

When the number k of the updating of the tap coefficients becomes greater than a as checked at step S66, a calculation of the evaluating function unit $Z_n$ is performed at step S69. The calculation at step S69 is repeated until the value k becomes greater than the sum of the given values a and b, and therefore, the process of calculation at step S69 is repeated more than b times, and the results of the b times calculation of the evaluating function unit is processed in step S69 to derive an average value. Practically, the value b is set at 1 to 120 times.

When the value k as checked at step S67 is greater than or equal to the sum of the values a and b, the evaluating function $Z_n$ is compared with that derived in the preceding cycle or the initial value, in the first cycle, at step S70. At step S71, when the sampling phase of the analog-to-digital converter is controlled so that $Z_n$ becomes smaller in the precursor type evaluation function, and $Z_n$ becomes greater in the peak detection type evaluating function. Here, the direction of the phase control is differentiated between the precursor type evaluating function and the peak detection type evaluating function. In the precursor type evaluating function, the optimal phase of the timing close can be obtained when the evaluating function is zero, but in the peak detection type evaluation value, the optimum phase of the timing clock can be obtained when the evaluating function coincides with the peak value $h_0$ of the impulse response.

After completing the sampling phase control, the convergence is determined in the same way as in step S31 of Fig. 13, at step S72. When the predetermined convergence condition is not satisfied, the value k

13

representing the timing is incremented, and the process from step S60 is repeated.

As set forth above, according to the present invention, when receiving a waveform having an impulse response including an intersymbol interference, the evaluating function unit is used for a reproduction of the timing clock of the received signal. Namely, to minimize the influence of the impulse response sequence $h_1$, $h_2$, .... $h_N$, the evaluating function unit is used. Also, by using the decision feedback equalizer, $h_1$, $h_2$, .... $h_N$ can be accurately predicted to thereby enhance the accuracy of the evaluating function unit.

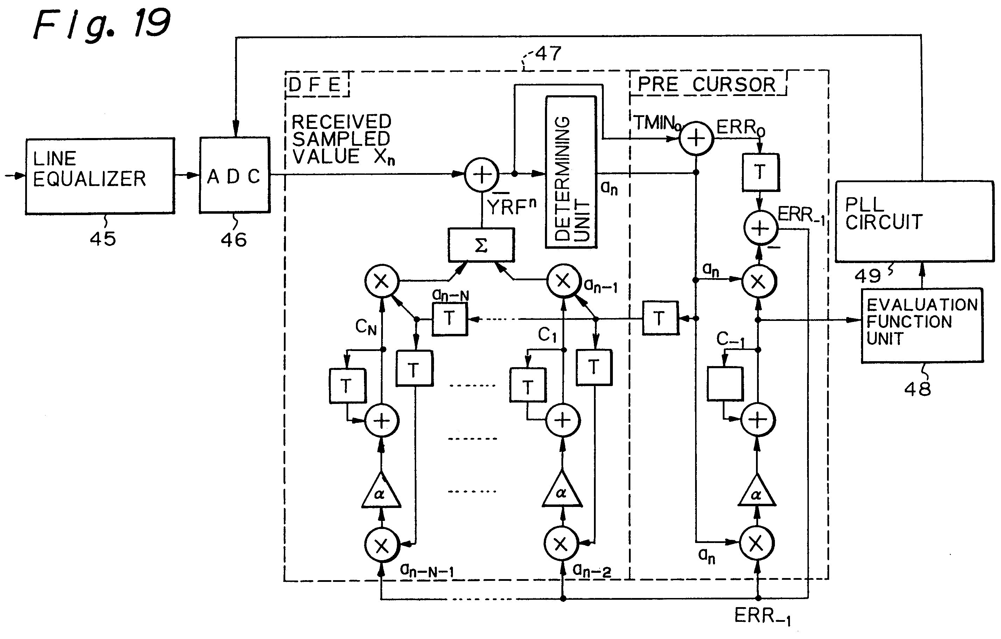

Figure. 19 shows a third preferred embodiment of the timing clock reproduction circuit to be employed in the first embodiment of the timing clock reproducing system according to the present invention. The construction of the shown circuit is essentially similar to that in the embodiments of Figs. 15 and 16, and is different from the former embodiments only in that the precursor equalizing tap coefficient $C_{-1}$ in the DFE, as the predicted value of the precursor $h_{-1}$, is directly input to the evaluating function unit 48. In this embodiment, the evaluating function unit 48 controls the sampling timing signal of the PLL circuit 49, to thus reduce the tap coefficient $C_{-1}$.

The process of the timing clock reproduction performed by the timing clock reproducing circuit of Fig. 19 is essentially similar to that illustrated in Fig. 18, and is different only in that the process for averaging $Z_n$ in step S69 by b times is eliminated, and that the phase controlling process of step S71 is performed to thus reduce the tap coefficient $C_{-1}$.

As set forth above, according to the shown embodiment of the timing clock reproducing system, a line equalization can be performed by predicting the precursor $h_{-1}$. Also, according to the shown embodiment of the timing clock reproducing system, by employing the decision feedback equalizer with the precursor equalizing tape coefficient, it becomes possible to ensure an extraction of the optimal phase of the reproduced timing clock, at a high speed.

In the foregoing embodiments, only the precursor $h_{-1}$ or the main cursor $h_0$ is used, and to increase the accuracy of the prediction of the evaluation function, a further embodiment of the present invention is provided as follows.

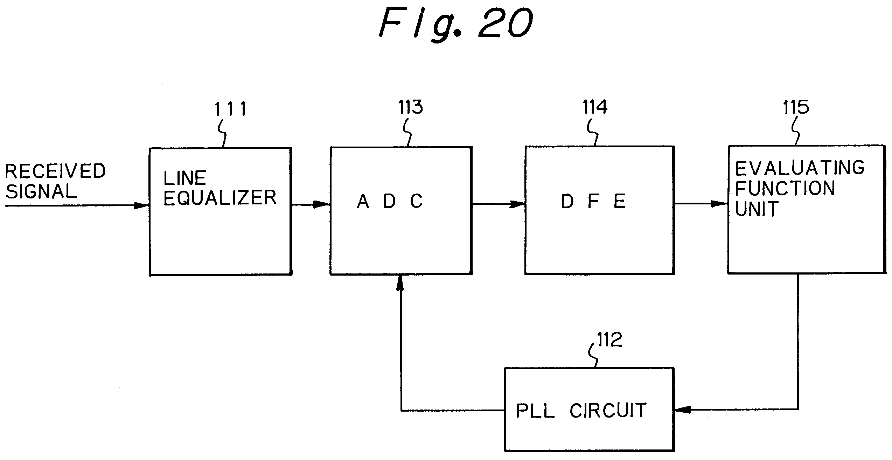

Figure. 20 shows the principle of another embodiment of a timing clock reproducing system according to the present invention. In the shown construction, an analog-to-digital converter 113 samples a signal received from a line equalizer 111, which shapes the received signal to us eliminate distortion of the waveform thereof. The sampling timing of the analog-to-digital converter 113 is controlled by a sampling timing control signal issued by a PLL circuit 112. A decision feedback equalizer 114 includes a tap coefficient for equalizing a precursor, and outputs $C_{-1}$ and $C_0$ as predicted values of the precursor $h_{-1}$ and a main cursor $h_0$ with respect to the received signal sample values input from the analog-to-digital converter 113.

An evaluating function unit 115 calculates an evaluating function for controlling a sampling timing on the basis of the precursor equalizing tap coefficient $C_{-1}$ and the main cursor equalizing tap coefficient $C_0$, and controls the PLL circuit 112 based on the result of the calculation.

In the shown embodiment of the timing clock reproducing system of Fig. 20, the evaluating function is determined based not only on the precursor value $h_{-1}$ but also on the main cursor value h0, to thus ensure the accuracy of the evaluating function even when a relatively large far-end crosstalk or near-end echo is superimposed on the received signal.

The decision feedback equalizer 114 in the shown embodiment derives the predicted values of the precursor $h_{-1}$ and the main cursor $h_0$, and as set forth above, these predicted values are used as tap coefficients $C_{-1}$ and $C_0$ for deriving the evaluating function, and thus the accuracy of the detection of the optimal phase of the received signal can be enhanced to determine the evaluating function $Z_n$ by:

$$Z_n = C_0 - |C_{-1}| \quad (22)$$

Namely, for example, in Fig. 8 it is assumed that, when the main cursor $h_0$ is "1" and the precursor $h_{-1}$ is "0", the phase shift in the advancing direction occurs and offsets those values respectively to 0.9 and -0.1. In such a case, although the errors in the precursor and the main cursor are 0.1, the error in the evaluating function becomes 0.2, and therefore, if only the main cursor or the precursor is used, it is difficult to detect the optimal phase. According to the shown embodiment, however, the sensitivity to the phase shift can be increased, to thus ensuring a detection of the optimal phase of the received signal.

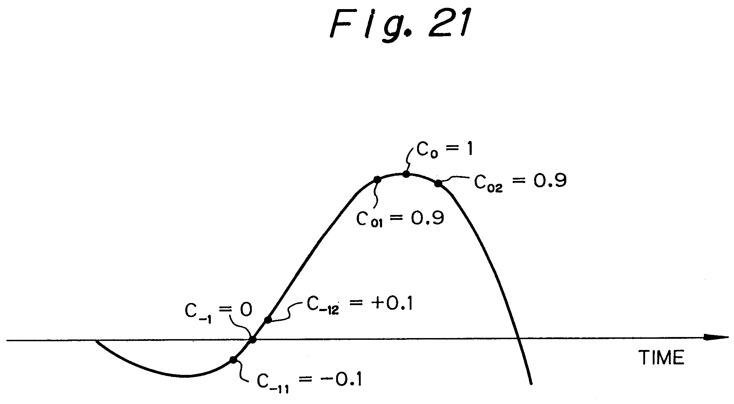

The process for determining the evaluating function employed in this embodiment of the timing clock reproducing system, as briefly discussed above, will be explained with reference to Fig. 21. In Fig. 21, it is assumed that the optimal phase is detected when the main cursor equalizing tap coefficient $C_0$ is one and the precursor equalizing tap coefficient $C_{-1}$ is zero. When the evaluating function $Z_n$ is expressed by the equation (22) set forth above, and when it is assumed that the main cursor equalizing tap coefficient $C_{01}$ is

0.9 and the precursor equalizing tap coefficient $C_{-11}$ is -0.1, due to an adavance of the detection timing, the evaluating function becomes 0.8 and is smaller than that occuring upon the detection of the optimal phase by 0.2.

In contrast when the detecting timing is shifted toward a delay of the phase, to make the main cursor equalizing tap coefficient $C_{02}$ 0.9 and the precursor equalizing tap coefficient $C_{-12}$ +0.1, the evaluating function also becomes 0.8 and is smaller than that occuring at the optimal phase by 0.2. Accordingly, the error in the detecting phase from the optimal phase becomes twice as large as that solely evaluated bying using either the main cursor equalizing tap coefficient or the precursor equalizing tap coefficient, and therefore, the precision of the detection of the optimal phase can be enhanced.

Further, the equation (22) for deriving the evaluating function can be expressed in more general form, using a positive real value $\alpha$ and a real value $\beta$ greater than one, as follows:

$$Z_n = \alpha C_0 - \beta |C_{-1}| \quad (23)$$

Furthermore, in the timing clock reproduction, which will be discussed later, when the calculation of the evaluating function are repeated for a plurality of cycles, the evaluating function can be expressed as:

$$Z_n = E[\alpha C_0 - \beta |C_{-1}|] \quad (24)$$

Here, E represents an expected value and can be defined by an average value of the resultant values of an N times calculation. In such a case, the forgoing equation (24) can be modified as:

$$Z_k = \frac{\sum_{i=0}^{N} [\alpha C_0^i - \beta |C_{-1}^i|]}{N} \quad \dots\dots (25)$$

Here, $C_0^i$ and $C_{-1}^i$ are tap coefficients $C_0$ and $C_{-1}$ at an evaluating function calculation timing $k+1$, after starting the calculation at a time (k).

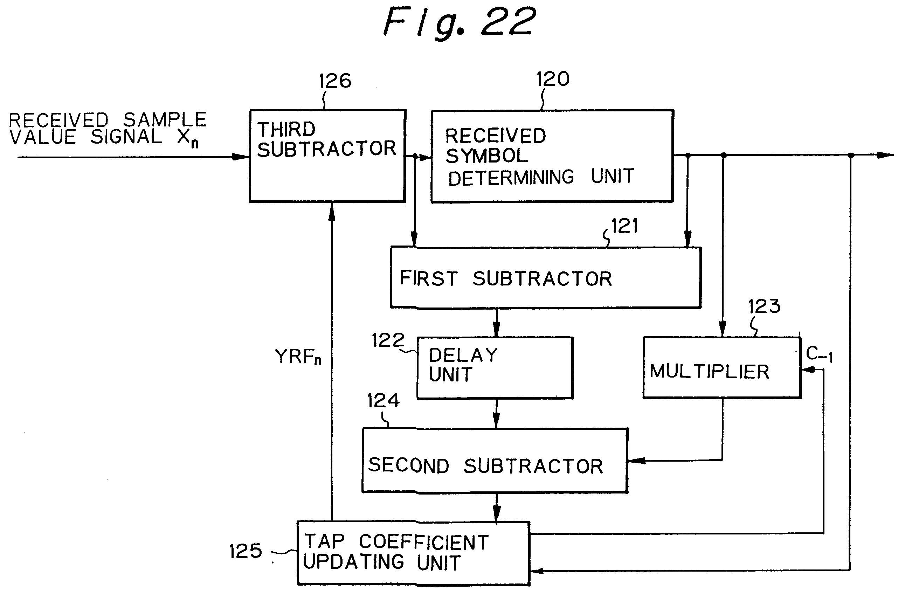

Figure. 22 shows the fundamental and general construction of the decision feedback equalizer 114 which can be employed in the embodiment of the timing clock generating system shown in Fig. 20 according to the present invention. Figure. 22 is illustrated by assuming that the current symbol value is $a_n$, the symbol values of one to N preceding cycles are respectively $a_{(n-1)}$ to $a_{n-N}$, the symbol value of the next cycle is $a_{-1}$, the impulse response sequence corresponding thereto is $h_0$, $h_1$ to $h_N$, and the impulse response of the precursor is $h_{-1}$. In this case, the received signal sample value $X_n$ can be expressed by the following equation (26), due to the presence of an intersymbol interference:

$$X_n = h_{-1} a_{-1} + h_0 a_n + h_1 a_{n-1} + \dots + h_N a_{n-N} \quad (26)$$

In Fig. 22, the decision feedback equalizer inculdes a received symbol determining unit 120, a first subtractor 121, a delay unit 122, a multiplier 123, a second subtractor 124, a tap coefficient updating unit 125, and a third subtractor 126. The received symbol determining unit 120 determines the received signal symbol value. The operation performed by the received signal symbol determining unit 120 is substantially the same as that performed by the determining unit 15 in the former embodiment. Namely, the received symbol determining unit 120 feeds the derived received symbol value to the first subtractor 121, and the first subtractor 121 also receives an input for the received symbol determining unit 120 to derive a difference between these inputs. The difference thus derived by the first subtractor 121 represents the current residual error. The function of the substrator 121 is substantially the same as that of the subtractor 16 in Fig. 11, and the residual error indicative output of the subtractor 121 is delayed by a delay unit 122, which is equivalent to the delay unit 19 of Fig. 11. The delayed value serves as an intermediate value for predicting a residual error in the immediately preceding cycle, and the delayed output of the delay unit 122 is fed to the second subtractor 124. The second subtractor 124 also receives a product of the output of the symbol value judging unit 120 and the precursor equalizing tap coefficient $C_{-1}$ from the tap coefficient updating unit 125, by multiplication made by a multiplier 123. The second subtractor 124 then derives a difference in the input intermediate value for prediction of the residual error in the one preceding cycle and the output of the multiplier 123, and the output of the second subtractor 124 is input to the tap coefficient updating unit 125. The tap coefficient updating unit 125 also receives the received symbol value from the received symbol value determining unit 120, and updates the tap coefficients $C_1$ to $C_N$ and the precursor equalizing tap coefficient $C_{-1}$, respectively, corresponding to the impulse response sequence $h_1$ to $h_N$ and the precursor $h_{-1}$, based on these inputs. The tap coefficient updating unit 125 outputs the precursor equalizing tap coefficient $C_{-1}$ thus updated, and updates the main cursor equalizing tap coefficient $C_0$ and outputs the same for use in the process of reproducing the timing clock, as discussed later. The tap coefficient updating unit 125 also outputs the echo replica $YRF_n$, which can be expressed by:

$$YRF_n = C_1 a_{n-1} + C_2 a_{n-2} + .... + C_N a_{n-N} \qquad (27)$$

The echo replica $YRF_n$ is fed to a third subtractor 126 which corresponds to the subtractor 21 of Fig. 11. The third subtractor 126 subtracts the echo replica $YRF_n$ from the receiving signal sample value $X_n$ to derive the input for the received symbol determining unit 120.

In the decision feedback equalizer of Fig. 22, it is essential to set all terms other than the term $h_0 a_n$ to zero, to accurately determine of the received current symbol value $a_n$.

The term including the precursor $h_{-1}$, however, is determined by a transmitting code value of one cycle later, but a prediction of such a future code is practically not possible. Therefore, as set forth below, corresponding to one cycle delay for the currently judged receiving symbol, the currently determined received symbol value is taken as that of one cycle before. Similarly, the current residual error as the difference between the input and output of the received symbol determining unit 120 is take as the intermediate value for predicting the residual error for the one preceding cycle by providing a one cycle delay by the delay unit 122. The tap coefficients are updated by using the precursor equalizing tap coefficient $C_{-1}$.

As set forth above, in the decision feedback equalizer of Fig. 22, when the residual error becomes zero, the impulse response sequence $h_1$ to $h_N$ coincides with the tap coefficient $C_1$ to $C_N$. Therefore, the input for the received symbol determining unit 120 is made approximately $C_{-1} a_{-1} + a_n$ by are setting $C_0$ to "1". Assuming that the result of the determination is $a_n^*$, the intermediate value for predicting the residual error can be expressed by $C_{-1} a_n + a_{n-1} - a_{n-1}^*$. Therefore, the resultant value $a_{n-1} - a_{n-1}^*$ (approximated value) of the substraction is taken as the final residual error, and thus tap coefficients $C_{-1}$, $C_1$ to $C_N$ are updated in such away that the residual error approaches zero.

When the residual error ideally becomes zero, the tap coefficient $C_{-1}$ coincides with the precursor $h_{-1}$, and thus the input for the symbol determining unit becomes $h_{-1} a_{-1} + a_n$. Therefore, when $h_{-1}$ is zero, or, for example, by setting the precursor $h_{-1}$ to zero in calculation of the evaluating function for the impulse response, the input for the symbol determining unit exactly matches the current transmitted symbol value $a_n$. The process set forth above, makes possible a prediction of the precursor $h_{-1}$ in the shown embodiment.

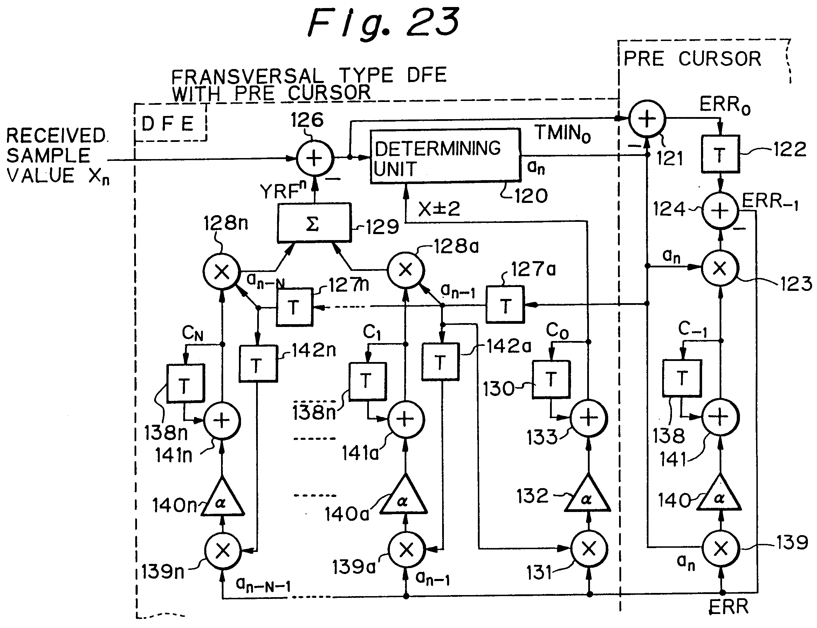

Figure. 23 shows a practical embodiment of the decision feedback equalizer applicable for a practical implementation of the shown embodiment of the timing clock reproducing system according to the present invention. In Fig. 23, components common to the construction of Fig. 22 will be represented by the same reference numerals, and a detailed discussion thereof omitted so as to avoid redundancy and to simplify the disclosure. The DFE in Fig. 23 is almost the same as the DFE in Fig. 12, except that the DFE in Fig. 23 includes a slice level forming circuit consisting of units 130 to 133. Also, the PRECURSOR portion in Fig. 23 is exactly the same as the PRECURSOR portion in Fig. 12, and therefore, a detailed description of the construction of the equalizer shown in Fig. 23 is omitted.

The main difference between Figs. 12 and 23 is that, in Fig. 23, $\pm 2C_0$ is input to the determining unit 120, where $C_0$ is the main cursor equalizing tap coefficient, and accordingly, the slice levels are formed. For example, when $C_0$ is $+1$, the slice levels for the determining unit 120 are $\pm 2$.

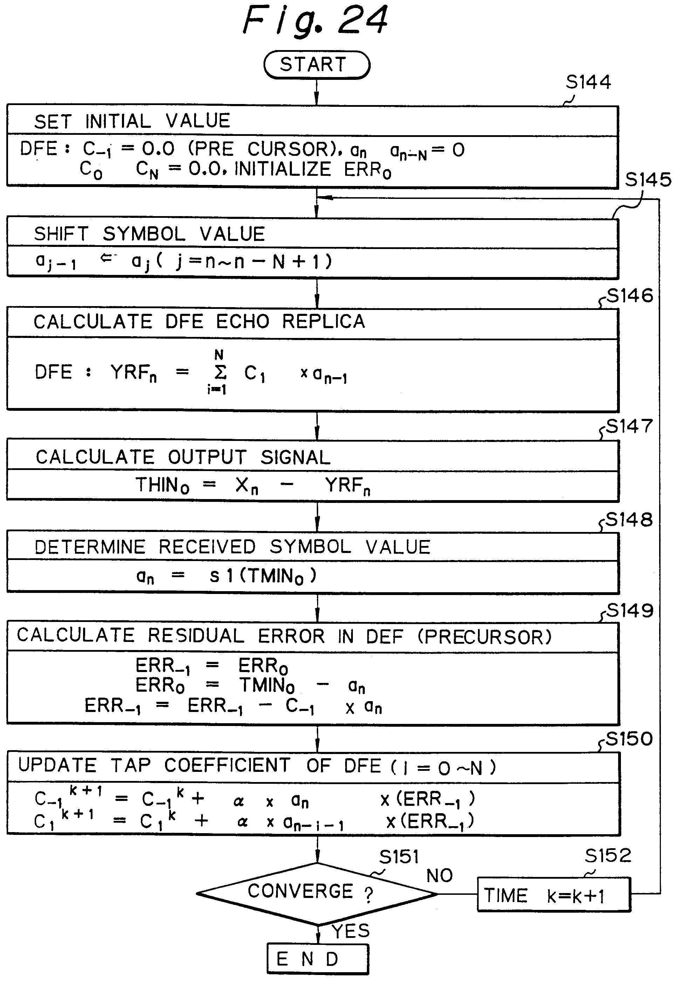

Figure 24 shows a flowchart explaining the process of the updating of the tap coefficients in the decision feedback equalizer of Fig. 23.

The process shown in Fig. 24 is almost the same as the process shown in Fig. 13 except that, in Fig. 24, at step S150, the main cursor equalizing tap coefficient $C_0$ is updated. The tap coefficient $C_0$ is delayed by a T delay unit 130 for one cycle, and is supplied to an adder 133. The adder 133 also receives the residual error $ERR_{-1}$ from a multiplier 132 multiplied by a relatively small negative constant $\alpha$ at a coefficient multiplier 132, and the adder 133 derives a sum of the delayed tap coefficient $C_0$ and the product from the coefficient multiplier 132, which sum serves as an updating value for the tape coefficient

16

$C_0$.

The updating of the tap coefficients by the received impulse response is the same as described with reference to Fig. 14.

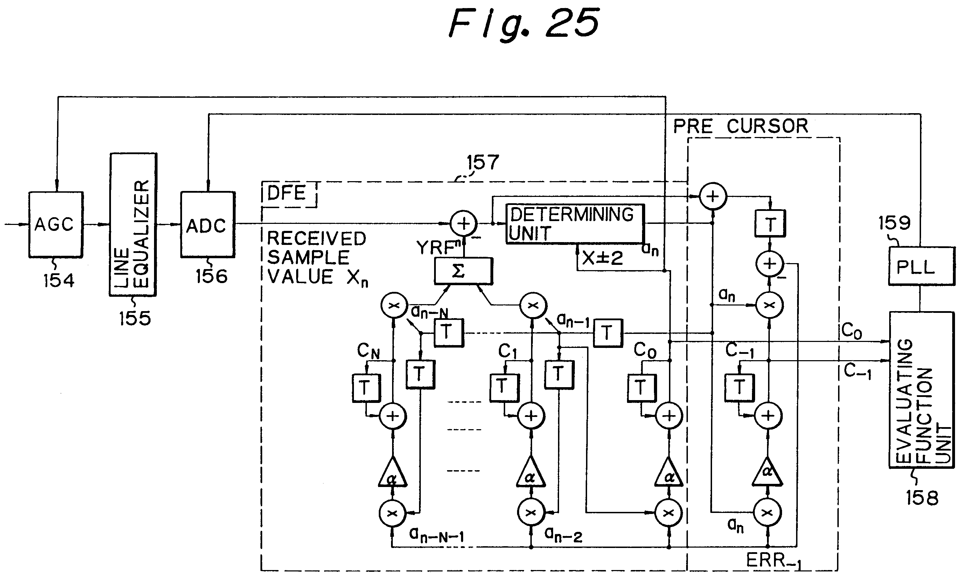

Figure 25 shows a practical construction of the second embodiment of the timing clock reproducing system in which the decision feedback equalizer of Fig. 23 is employed. In the shown embodiment, an automatic gain control circuit (AGC) 154 is employed. In general, the AGC adjusts the receiving signal level to a predetermined level on the basis of the result of a calculation of the received signal power. The analog-to-digital converter (ADC) 156 shapes the waveform of the received signal, and samples the received signal value in accordance with the sampling timing control signal from the PLL circuit 159, and then converts the sampled signal into a digital received signal sample value $X_n$ to be input to the decision feedback equalizer. An evaluating function unit 158 adjusts the sampling timing control signal of the PLL circuit 159 on the basis of the precursor equalizing tap coefficient $C_{-1}$ and the main cursor equalizing tape coefficient $C_0$, by performing a calculation using the equation (23).

In the embodiment of Fig. 25, the main cursor equalizing tap coefficient $C_0$ is also set to the AGC 154, to adjust the output level thereof. As can be appreciated, since the value of the main cursor equalizing tap coefficient $C_0$ directly corresponds to the current received symbol value $a_n$, it becomes unnecessary to perform a calculation of the received power in AGC by using $C_0$ as a gain control signal, and therefore, the construction of the AGC 154 can be simplified.

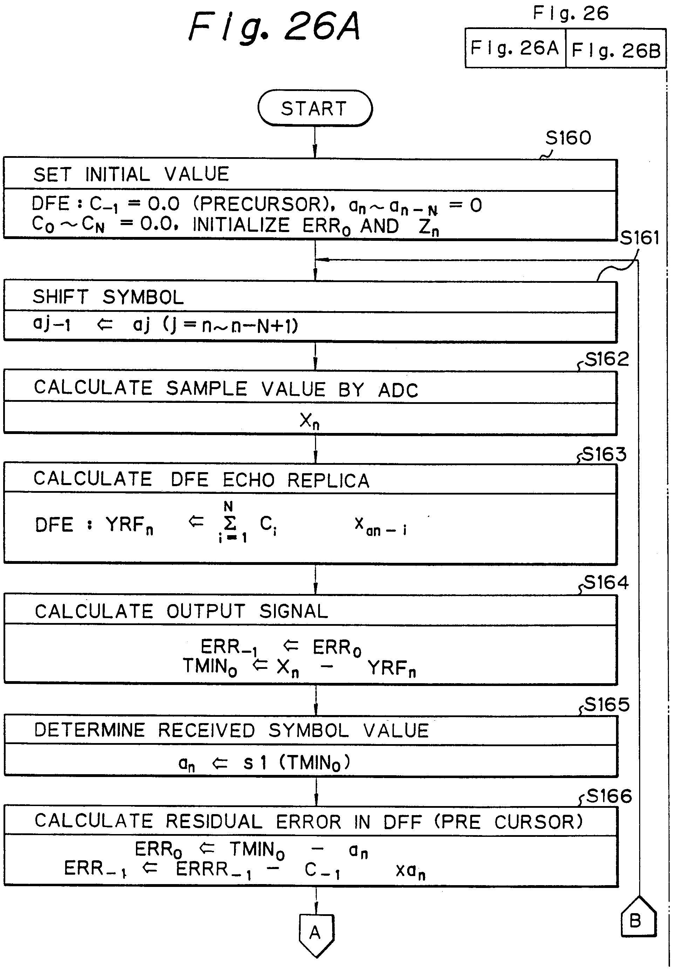

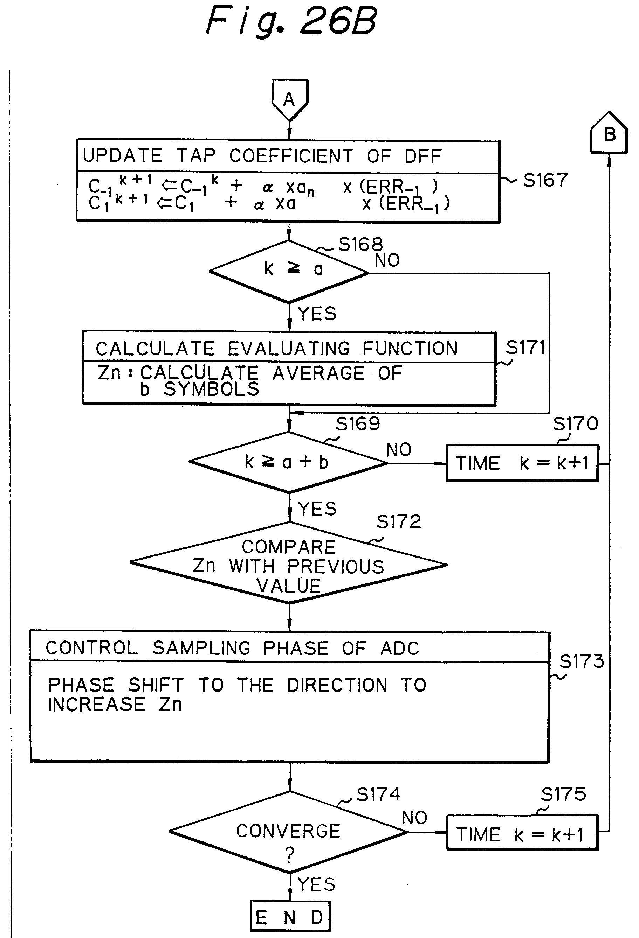

Figures 26A and 26B are flowchart showing the process of the timing clock reproduction. In the process of Figs. 26A and 26B, the processes at steps S160 to S167 are essentially the same as those of steps S144 to S150 of Fig. 24. The shown process is different from the process of Fig. 24 in that, at step S160, the initial value to be compared with the evaluating function unit $Z_n$ is set to zero. Also, the shown process is different from the former process in that, at step 62, a calculation of the received signal sample value is performed by the analog-to-digital converter 156 of Fig. 25, and at step S64 in which the $TMIN_0$ is calculated, the current residual error $ERR_0$ is set as the residual error $ERR_{-1}$ of the one preceding cycle, instead of step S166 corresponding to step S149 in Fig. 24.

In the process of Fig. 26, the processes at step S167 to step 175 are essentially the same as those of steps S65 to S73 except that, in Fig. 26, at step S173, the sampling phase $Z_n$ of the analog-to-digital converter is controlled so that $Z_n$ becomes larger than the above value. The direction of the phase control is determined in such a way that the timing has an optimum phase and $Z_n$ has a maximum Value "1", when the precursor is zero.

As can be appreciated, according to the above-described embodiment, an effect and advantage equivalent to those of to the foregoing first embodiment of the timing clock reproducing system of the present invention can be obtained. Also, since the shown embodiment uses both the precursor equalizing tap coefficient and the main cursor equalizing tap coefficient, the accuracy if the detection of the optimal phase can be further enhanced.

Subsequently, a preferred embodiment of a symbol corder which uses the above-described decision feedback equalizer of the former embodiments is described.

The symbol coder may be an echo canceler transmitting symbol coder assembled in a data transceiver in a digital subscribed line transmission, for canceling an echo of the transmitting signal to the receiving side. The symbol coder also may be a received symbol coer used in a line equalizer for compensating line loss.

Before disclosing the preferred construction of the symbol coder, a brief discussion of the peripheral state of art will be given, to facilitate a better understanding of present the invention.

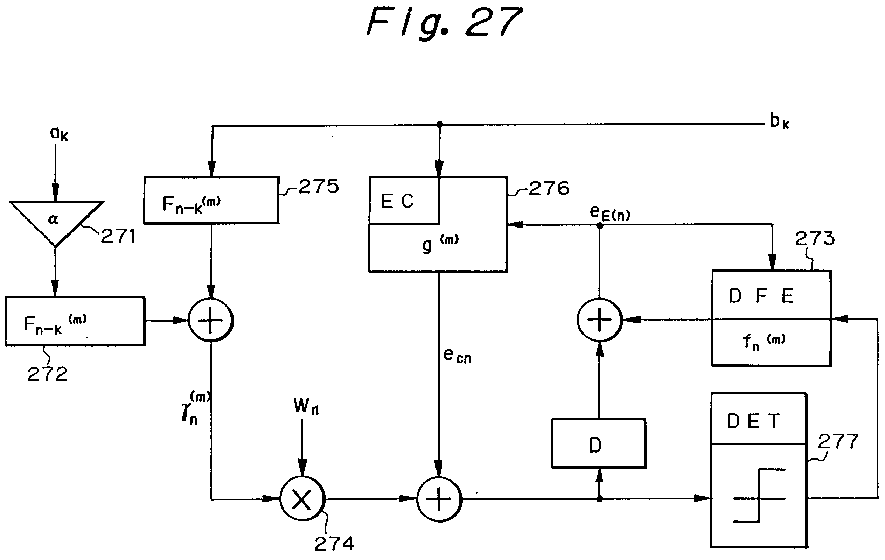

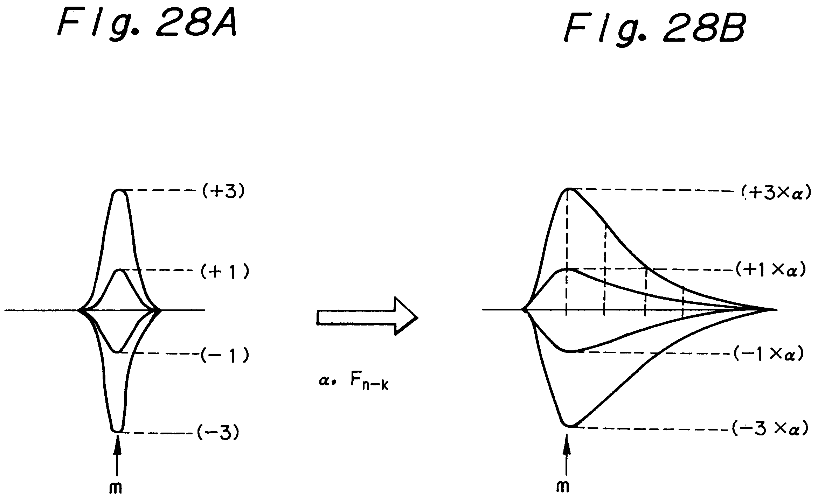

Here, the discussion will entail the identification of the data symbol in a digital subscriber line communication using a 2B1Q code, with reference to the construction of a data transceiver illustrated in Fig. 27. In Fig. 27. $a_k$ represents a far-end signal arriving from the counterpart communication unit. In a 2B1Q code system using four levels of $+3$, $+1$, $-3$ and $-4$, the far-end signal has the waveform as shown in Fig. 28A, and due to an attenuation of the peak of the signal in accordance with an attenuation coefficient $\alpha$ in a unit 271, of the transmission line, and to frequency characteristics $F_{n-k}$ in a unit 272 of the cable line, and intersymbol interference occurs, and as a result, the waveform of the signal received at the receiver side becomes as illustrated in Fig. 28B.

In Fig. 27, to avoid intersymbol this interference, a decision feedback equalizer 273 is employed. Also, to compensate for an attenuation $\alpha$ of the received primary signal at the sampling phase m, the received signal is multiplied by a gain $W_n$ of the AGC by a multiplier 274.

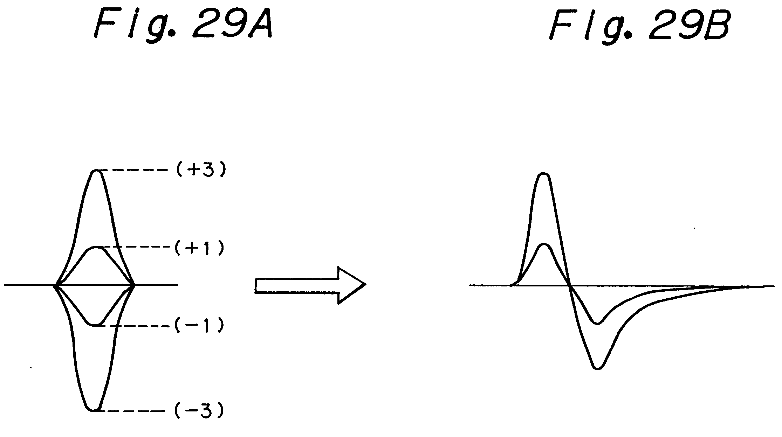

Similarly, $b_k$ represents a near-end signal which is the symbol transmitted from the transmitter side. In the 2B1Q code, the near-end signal has the form as illustrated in Fig. 29A. This signal causes crosstalk by a hyrid circuit, to cause the waveform as illustrated in Fig. 29B. The characteristics causing this distortion of the waveform are echo-pass characteristics $G_{n-k}$ in a unit 275 in Fig. 27, and reverse characteristics opposite to the echo-pass characteristics are generated by an echo canceller 276. These reverse characteristics are represented by $g_n$ in Fig. 27. As a result, the received signal $r_n$ can be expressed by the following equation, assuming that the sampling phase is m:

$$r_n^{(m)} = \alpha * \sum_{k=0}^{n} (a_k * F_{n-k}) + \sum_{k=0}^{n} (b_k * G_{n-k}^{(m)}) + V_n^{(m)}$$

$$\cdots \quad (28)$$

The first term in the right hand component of this equation represents a far-end signal modulated and attenuated by the cable line; the second term represent a wrapparound echo; and the third term represents a noise from the cable line.

In Fig. 27, an echo replica of the decision feedback equalizer 273 and the echo canceller 276 are respectively expressed as:

Echo Replica of the DFE

$$= \sum_{k} a_k * g_{n-k}$$

Echo Replica of the Echo Canceller

$$= \sum_{k} b_k * f_{n-k}$$

When a received signal and transmitted signal do not exist, i.e., when both $a_k$ and $b_k$ are zero, zero level does not exist in the 2B1Q code, and therefore, a problem is encountered to require special process to be initiated in response to the absence of signals, to thereby avoid a generation of an echo replica in the echo canceller and the DFE.

The 2B1Q code system converts 2 bits into four levels, as follows:

00 ⇒ -3
01 ⇒ -1
10 ⇒ +1
11 ⇒ +3

When these four levels are received at the received symbol determining unit, since the three threshold levels, exist, i.e., -2, 0, +2, +1 or -1 of the symbol of the far-end symbol is determined even after a termination of the communication, due to the presence of slight noise.

Since the DFE generates the echo replica using this determination value, an echo replica can be generated even in the absence of the far-end signal, and this makes it difficult to derive a residual error and causes error in the updating of the tap coefficient in the echo canceller, which prevents an anaccuratel receiving of the far-end signal.

To solve the problems encountered in the prior art, the following embodiment of the present invention adds a 0 value symbol to the 2B1Q code so that the received symbol determining unit can make an accurate judgement of the zero level. Also, this embodiment enables a transmission of a zero symbol from a transmitting symbol generator, to enable an accurate determination of the far-end signal.

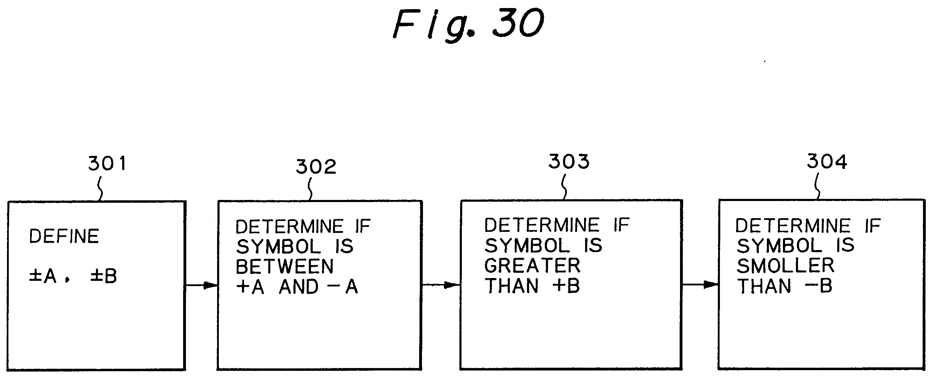

Figure 30 as a conceptual illustration of the preferred embodiment of the symbol coder according to the present invention. The symbol coder of the shown embodiment is illustrated in a discrete form as used in the received symbol determining unit in the line equalizer for compensating for a loss in the subscriber line, such as the decision feedback equalizer, for example.

In Fig. 30, threshold levels ±A and ±B are provided at stage 301. Here, A is a real value greater than 0 and smaller than 1, e.g., 0.25, and B is a real value greater than 1 and smaller than 3, e.g., 2. To ensurean accuratel determining of the symbol 0, the level A should be greater than a possible noise level but as small as possible.

At stage 302, when the input signal level is between +A and -A, e.g. between +0.25 and -0.25, the received symbol is determined to be zero. When the input signal level is greater than +A, it is determined in stage 303 whether the input signal level is greater than +B, e.g., +2. When the input level is smaller than +B, it is determined that the symbol of the received signal is +1. When the input signal level is greater than +B, the symbol of the receiving signal is determined to be +3. Similarly, when the input signal level is smaller than -1, it is determined in stage 304 whether the input level is smaller than -B. When the input level is greater than -B, the symbol of the received signal is determined to be -1. When the input level is smaller than -B, the received signal is determined to be -3.

Further, in the shown embodiment, the transmitting symbol coder of the echo canceller, which cancels near-end crosstalk, generates five levels of the symbols, e.g., +3, +1, 0, -1 and -3, and thus it kis possible to accurately update the tap coefficients in the echo canceler.

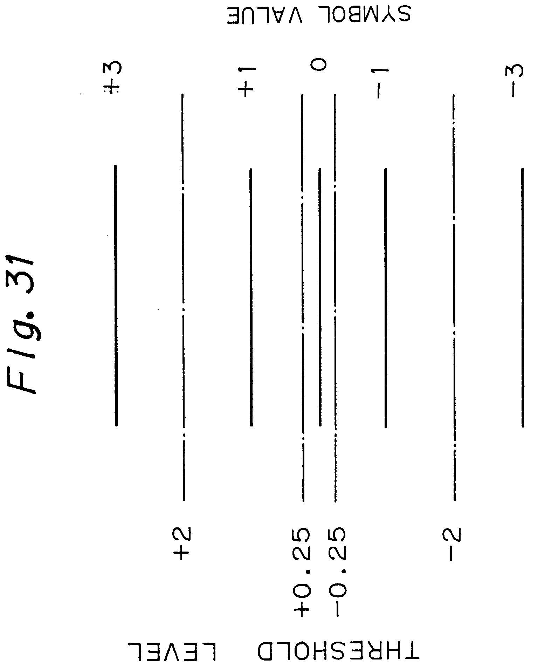

Figure 31 shows an example of the implementing of the shown embodiment of the symbol coder according to an embodiment of the present invention. As can be seen, five symbol values, e.g. +3, +1, 0, -1 and -3. are provided, and to determined the symbol values, four threshold levels, e.g. +2, +0.25, -0.25 and -2 are provided.

In the construction of Fig. 27, when the tap coefficients do not satisfactorily converge, the intersymbol interference is caused by an attenuation in the cable line, and thus the received signal level becomes random. When a satisfactory convergence is established in the tap coefficients of the DFE, however, the received signal level matches one of the five levels, and therefore, even when the received signal becomes 0, the DFE 273 can maintain normal operations.

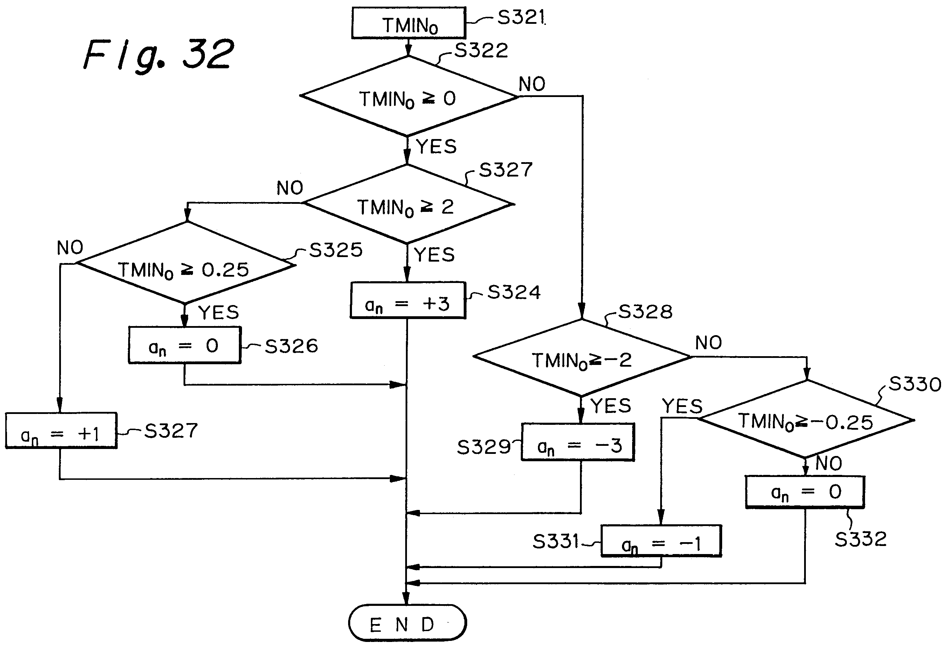

Figure 32 is a flowchart showing the process of determining the received symbol value. The input $TMIN_0$ for the received symbol determining unit is stored in a register. At step S321, the register value $TMIN_0$ is read out, and at step S322, it is determined whether a polarity of the read out value $TMIN_0$ is positive or negative. When the value found at step S323 is positive, it is determined whether the read out value is greater than or equal to 2 at a step S323. When the read out value is greater than or equal to 2, it is determined that the receiving symbol value $a_n$ is +3, at step S324.

When the read out value is smaller than 2, as determined at step S323, it is again determined at step S325 whether the read out value is smaller than 0.25. If so, the received symbol value $a_n$ is set at 0 at a step S326 and if not, it is set at 1 at a step S327.

Further, when the value formed at step S327 is negative, it is determined whether the read out value is smaller than or equal to -2, at step S328. When theread out value is smaller than or equal to -2, it is determined that the received symbol value $a_n$ is -3, at step S329.

When the read out value is greater than 2, as found at step S328, it is again determined at step S330 whether the read out value is greater than -0.25. If so, the received symbol value $a_n$ is set at -1 at a step S331, and if not, it is set at 0 at step S332.

Although the shown embodiment has been discussed in terms of specific threshold values, i.e., ±0.25 and ±2, for discriminating to zero symbol, these values should not be understood as essential to the implementation of the present invention, and can be varied in any way.

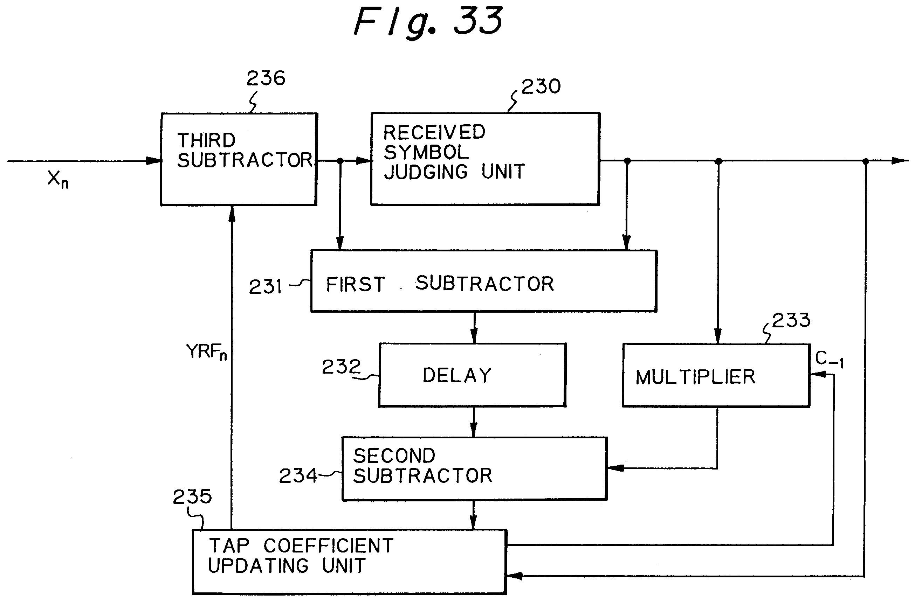

Fig. 33 shows the fundamental and general construction of the decision feedback equalizer which employs the preferred embodiment of the symbol coder as the receiving symbol judging unit. The construction shown in Fig. 33 is substantially the same as the construction shown in Fig. 22, the only difference being that in the decision feedback equalizer shown Fig. 33, the received symbol determining unit 230 comprises the preferred embodiment of the symbol coder which can discriminate the receiving symbol among five levels including a zero level, and determines the received signal symbol value. The operation performed by the received signal symbol determining unit 230 is substantially the same as that performed by the unit 15 in the first embodiment of Fig. 11 or the unit 120 in Fig. 22. Therefore, a detailed description of the DFE shown in Fig. 33 is omitted.

In the decision feedback equalizer of Fig. 33, it is essential to cancel all terms in the received signal sample values Xn other than the term of $h_0 a_n$, to accurately determined the received symbol value $a_n$.

Furthermore, in the embodiment shown in Fig. 33, since the symbol coder forming the received symbol determining unit is able to detect the zero symbol, it becomes possible to easily determine the absence of the received signal.

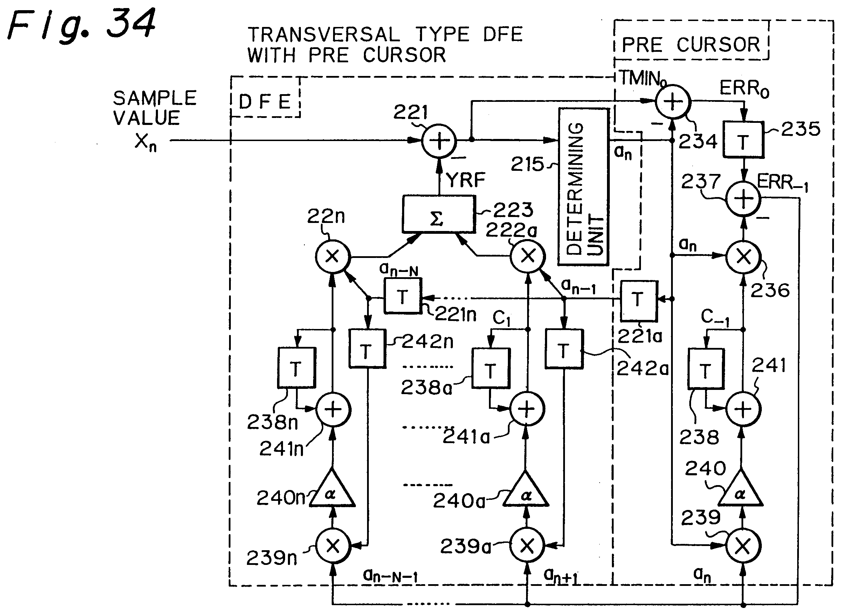

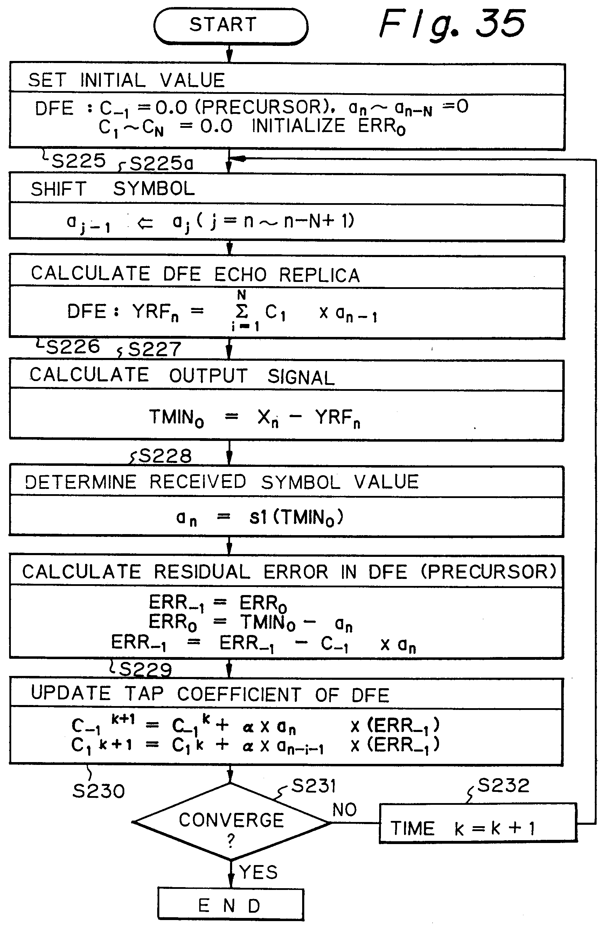

In Figs. 34 and 35, the only difference from the embodiments of Figs. 12 and 13 is that the five symbol values and corresponding four slice levels are provided for the received symbol determining unit 215.

As can be appreciated, the present invention thus constructed can fulfill all of the objects and advantages desired.

Although the present invention has been disclosed in terms of the preferred embodiments of the invention, the invention can be embodied in various ways and arrangements, and thus it should be understood that all of the embodiments and/or modifications that can be implemented without departing from the principle of the invention set out in the appended claims, should be regarded as within a scope of the present invention.

Reference signs in the claims are intended for better understanding and shall not limit the scope.

**Claims**

1. A timing clock reproducing system in a digital subscriber line communication for extracting an optimum phase of a clock signal, comprising:

   a line equalizer (111) for shaping a waveform distorted by a transmission through cable line;

   a PLL circuit (12) for generating a sampling timing control signal;

   an analog-to-digital converter (13) for sampling a signal received from said line equalizer at a timing controlled by said sampling timing control signal from said PLL circuit, and for converting said received signal into a digital signal;

   a decision feedback equalizer (114) , connected to the output of said analog-to-digital converter, for outputting tap coefficients including a precursor equalizing coefficient; and

   an evaluating function deriving means (115), connected to the output of said decision feedback equalizer, for deriving an evaluating function based said precursor equalizing tap coefficientr;

   said PLL circuit (112) being controlled by said evaluating function for adjusting a sampling timimg of said analog-to-digital converter.

2. A timing clock reproducing system as set forth in claim 1, wherein said decision feedback equalizer includes means (18) for periodically updating tap coefficients including said precursor equalizing tap coefficient on the basis of symbol values of the receiving signals.

3. A timing clock reproducing system as set forth in claim 2, wherein said decision feedback equalizer includes means for calculating a symbol value of the currently received signal on the basis of an input derived from a received signal sample value sampled at the current sampling timing.

4. A timing clock reproducing system as set forth in claim 3, wherein said decision feedback equalizer further comprises means for deriving a residual error on the basis of said input and output of said symbol value calculating means.

5. A timing clock reproducing system as set forth in claim 4, wherein said decision feedback equalizer further comprises means for deriving an intermediate value for use in said means for updating said tap coefficient on the basis of said residual error.

6. A timing clock reproducing system as set forth in claim 5, wherein said tap coefficient updating means periodically updates said tap coefficient within one sampling cycle thereby obtain a predetermined convergence of said residual error.

7. A timing clock reproducing system as set forth in claim 6, wherein said tap coefficient updating means compares the residual error value derived with respect to the instantaneous value of a tap coefficient with a predetermined threshold value to thereby repeat an updating operation for said tap coefficient as long as said residual error is greater than said predetermined threshold value.

8. A timing clock reproducing system as set forth in claim 1, wherein said evaluating function deriving means controls said PLL circuit for adjusting a sampling timing of said received signal, to reduce the evaluating function for a precursor type equalizer.

9. A timing clock reproducing system as set forth in claim 1, wherein said evaluating function deriving means controls said PLL circuit for adjusting a sampling timing of said received signal to increase the evaluating function by one for a peak detection type equalizer.

10. A timing clock reproducing system as set forth in claim 1, wherein said evaluating function deriving means (115) receives said precursor equalizing tap coefficient $C_{-1}$ and a main cursor equalizing tap coefficient $C_0$ for deriving said evaluating function for controlling said PLL circuit (112) and adjusting a sampling timing of said analog-to-digital converter.

**11.** A timing clock reproducing system as set forth in claim 10, wherein said evaluating function deriving means controls said PLL circuit for adjusting a sampling timing of said received signal to reduce the evaluating function for a precursor type equalizer.

**12.** A timing clock reproducing system as set forth in claim 10, wherein said evaluating function deriving means controls said PLL circuit for adjusting a sampling timing of said received signal to increase the evaluating function by one for a peak detection type equalizer.

**13.** A timing clock reproducing system as set forth in claim 7 or 10, which further comprises an automatic gain control circuit for automatically controlling a level of said received signal, and the gain of said automatic gain control circuit is controlled on the basis of the output of said evaluating function deriving means.

**14.** A timing clock reproducing system as set forth in claim 1, wherein said decision feedback equalizer assumes that the current symbol value of periodically transmitted codes is $a_n$, the symbol values of one to N preceding cycles are respectively $a_{(n-1)}$ to $a_{n-N}$, the symbol value of the next cycle is $a_{-1}$, the impulse response sequence corresponding thereto is respectively $h_0$, $h_1$ to $h_N$, and the impulse response of the precursor is $h_{-1}$, and a receiving signal sample value $X_n$ can be expressed by the following equation due to presence of an intersymbol interference:

$$X_n = h_{-1}a_{-1} - h_0 a_n + h_1 a_{n-1} + .... + h_N a_{n-N}$$

wherein the decision feedback equalizer comprises:

a tap coefficient updating means (10) for deriving equalizing tap coefficients $C_1$ to $C_N$ respectively corresponding to said impulse response sequence $h_1$ to $h_N$ and precursor equalizing tap coefficient $C_{-1}$ and outputting respectively $C_1 a_{n-1}$ + $C_2 a_{n-2}$ + ... + $C_N a_{n-N}$, based on a residual error predicting intermediate value in a preceding sampling cycle corresponding to a difference between an output and an input of a received symbol determining unit which determines a symbol value of a received signal, a value derived by subtracting a product of said precursor equalizing tap coefficient $C_{-1}$ and a current output of said received symbol determining unit, from said residual error predicting intermediate value, said current receiving symbol value $a_n$, and said $a_{n-1}$ to $a_{n-N}$;

a subtracting means (11) for deriving a difference between said receiving sample value and the output of said tap coefficient updating means;

said received symbol determining means (12) receiving an output of said subtracting means (11) and outputting the symbol value of the current received symbol.

**15.** A timing clock generating system as set forth in claim 1, wherein said decision feedback equalizer comprises a symbol coder for use in a line equalizer incorporated in a data transceiver for communication through a digital customer line using 2B1Q code for compensating a transmission loss through said customer cable line, said symbol coder comprising:

means (301) for defining a first pair of threshold levels (±A) having an absolute value which is greater than 0 and smaller than 1 and a second pair of threshold levels (±B) having an absolute value which is greater than 1 and smaller than 3;

means (302) for detecting an input signal level between said first pair of threshold levels for setting a received symbol value of said input signal to 0;

means (303) responsive to an input signal having a level greater than a positive value (+A) of said first pair of threshold levels and setting the received symbol value to +1 when said input signal level is smaller than a positive value (+B) of said second pair of threshold levels, and otherwise setting said received symbol value to +3; and

means (304) responsive to input signal having a level smaller than a negative value (-A) of said first pair of threshold level, and setting the received symbol value to -1 when said input signal level is greater than a negative value (-B) of said second pair of threshold levels and otherwise, setting said received symbol value to -3.

**16.** A timing clock reproducing system as set forth in claim 15, wherein said symbol coder is applied to a 2B1Q code system.

**17.** A decision feedback type line equalizer for removing an intersymbol interference between codes, wherein the current symbol value of periodically transmitted codes is assumed as $a_n$, the symbol values of one to N preceding cycles are respectively assumed as $a_{(n-1)}$ to $a_{n-N}$, the symbol value of the next cycle is $a_{-1}$, the impulse response sequence corresponding thereto are respectively assumed as $h_0$, $h_1$ to $h_N$, and the impulse response of the precursor is assumed as $h_{-1}$, and a received signal sample value $X_n$ can be expressed by the following equation, due to presence of intersymbol interferencey:

$$X_n = h_{-1} a_{-1} - h_0 a_n + h_1 a_{n-1} + .... + h_N a_{n-N}$$

wherein the decision feedback equalizer comprises:

a tap coefficient updating means (10) for deriving equalizing tap coefficients $C_1$ to $C_N$ respectively corresponding to said impulse response sequence $h_1$ to $h_N$ and precursor equalizing tap coefficient $C_{-1}$ and outputting respective of $C_1 a_{n-1}$ + $C_2 a_{n-2}$ + ... + $C_N a_{n-N}$, based on a residual error predicting intermediate value in a preceding sampling cycle corresponding to a difference between an output and an input of a received symbol determining unit which determining a symbol value of a received signal, a value derived by subtracting a product of said precursor equalizing tap coefficient $C_{-1}$ and a current output of said received symbol determining unit, from said residual error predicting intermediate value, said current received symbol value $a_n$, and said $a_{n-1}$ to $a_{n-N}$;

a subtracting means (11) for deriving a difference between said received sample value and the output of said tap coefficient updating means;

said received symbol determining means (12) receiving an output of said subtracting means (11) and outputting the symbol value of the current received symbol.

**18.** A timing clock reproducing system as set forth in claim 1, wherein the system is incorporated in a data transceiver.

**19.** A symbol coder for use in a line equalizer incorporated in a data transceiver for communication through a digital customer line using a 2B1Q code for compensating a transmission loss through said customer cable line, comprising:

means (301) for defining a first pair of threshold levels (±A) having an absolute value which is greater than 0 and smaller than 1 and a second pair of threshold levels (±B) having an absolute value which is greater than 1 and smaller than 3;

means (302) for detecting an input signal level between said first pair of threshold levels for setting a received symbol value of said input signal to 0;

means (303) responsive to an input signal having a level greater than a positive value (+A) of said first pair of threshold levels and setting the received symbol value to +1 when said input signal level is smaller than a positive value (+B) of said second pair of threshold levels, and otherwise, setting said received symbol value to +3; and

means (304) responsive to an input signal having a level smaller than a negative value (-A) of said first pair of threshold levels and setting the received symbol value to -1 when said input signal level is greater than a negative value (-B) of said second pair of threshold levels, and otherwise, setting said received symbol value to -3.

# Fig. 1

# Fig. 2

# Fig. 3

# Fig. 4

# Fig. 5

# Fig. 6

PLL

HEAR-END ECHO

2W

REFERENCE TIMING

SLAVE

MASTER

63

NEAR-END SIGNAL

64

OSCILLATE SYNCHRONOUS WITH REFERENCE TIMING AT MASTER STATION

62

61

TRANSMISSION TIMING

PHASE SHIFT (FREQUENCY "0")

RECEIVED FROM SLAVE SIDE SIGNAL

EP 0 476 487 A2

# Fig. 7

LINE
EQUALIZER
1

SAMPLED
VALUE
DETECTER

DATA
SYMBOL
IDENTIFIER

2b

2a

2

EVALUATING
FUNCTION
ARITHEMETIC
CIRCUIT
3

$h_0$ th

$h_0$

COMPARATOR
4

REPRODUCING CLOCK
CONTROL CIRCUIT
5

REPRODUCING
CLOCK

# Fig. 8

PRE CURSOR
$h_{-1}$

$h(0)$

POST CURSOR
$h_1$

IMPULSE RESPONSE

T    T

REPRODUCING CLOCK

# Fig. 9

AMPLITUDE h

"1"

$h_0$

$h_0$ th

$h_0$

$(\triangle)|(\triangle)$

ADVANCE    0  OPTIMUM    DELAY
PHASE

SAMPLING
PHASE

27

# F I g. 10

D F E

RECEIVED SAMPLED
VALUE SIGNAL

SUBTRACTING
UNIT

11

SYMBOL VALUE
DETERMINING UNIT

12

DATA
SYMBOL
VALUE

TAP COEFFICIENT UPDATING UNIT

10

EP 0 476 487 A2

# Fig. 11

RECEIVED SAMPLED VALUE $X_n$

DFE

DETERMINING UNIT — 15

$a_n$

RECEIVED SYMBOL VALUE

Σ — 23

22a

21 — 16

22n — X

$a_{n-N}$

T — 21n

$C_N$

X — 22a

$C_1$

$a_{n-1}$

T — 21a

19

−T

20

$a-1$

UPDATING UNIT FOR $C_n$ — 18

RESIDUAL ERROR $\varepsilon_n$

UPDATING UNIT C-1 — 17

EP 0 476 487 A2

Fig. 12  TRANSVERSAL TYPE DFE WITH PRE CURSOR

SAMPLED VALUE $X_n$

DFE

PRE CURSOR

DETERMINING UNIT

EP 0 476 487 A2

# Fig. 13

START

SET INITIAL VALUE                                                    ~S25

DFE $\cdot$ $C_{-1}=0.0$ (PRE CURSOR). $a_n \sim a_{n-N}=0$
        $C_1 \sim C_N=0.0$. INITIALIZE ERROR

SHIFT SYMBOL VALUE                                                   S25a

$a_{j+1} \Leftarrow a_j$ $(j=n-i-1 \sim n-1)$

CALCULATE DFE ECHOREPLICA                                            S26

$DFE : YRE_n = \sum\limits_{i=1}^{N} C_1 \quad x_{a_{an-1}}$

CALCULATE OUTPUT SIGNAL                                              S27

$TMIN_o = X_n - YRF_n$

DETERMINE RECEIVED SYMBOL VALUE                                      S28

$a_n = s1(TMIN)$

CALCULATE RESIDUAL ERROR IN DFE (PRE CURSOR)                         S29

$ERR_{-1} = ERR_0$
$ERR_0 = TMIN_o - x a_n$
$ERR_{-1} = ERR_{-1} - C_{-1} \times a_n$

UPDATE TAP COEFFICIENTS OF DFE $(i=1 \sim N)$                        S30

$C_{-1}{}^{k+1} = C + \alpha \times a_n \quad \times (ERR_{-1})$
$C_1{}^{k+1} = C + \alpha \times a_{n-i-1} \quad \times (ERR_{-1})$

CONVERGE ? — S31

NO → TIME k = k + 1 — S32

YES

END

# F I g. 14

# Fig. 15

EP 0 476 487 A2

Fig. 16

# Fig. 17

EP 0 476 487 A2

# F I g. 18A

F I g. 18

| F I g. 18A | F I g. 18B |
|---|---|

START

SET INITIAL VALUE — S59

DFE: $C = 0.0$ (PRE CURSOR), $a_n \sim a_{n-N} = 0$
$C_1 \sim C_N = 0.0$, INITIALIZE $ERR_0$ AND $Z_n$

CALCULATE SAMPLED VALUE
BY A/D CONVERTER — S60

$X_n$

$$a(j+1) = a(j)$$
$$(j = n-i-1 \quad n-1)$$
S61

CALCULATE DFE ECHO REPLICA — S62

DFE : $YRF_n \Leftarrow \sum_{i=1}^{N} C_i \quad x\, a_{n-i}$

CALCULATE OUTPUT SIGNAL — S63

$TMIN_{-1} \Leftarrow TMIN_0$
$ERR_{-1} \Leftarrow ERR_0$
$TMIN_0 \quad X_n - YRF_n$

DETERMINE RECEIVED SYMBOL VALUE ($\pm 1$, $\pm 3$) — S64

$a_n \Leftarrow s1(TMIN_0)$

CALCULATE RESIDUAL ERROR IN DFE (PRE CURSOR)

$ERR_0 \Leftarrow TMIN_0 - a_n$
$ERR_{-1} \Leftarrow ERR_{-1} - C_{-1} \quad x a_n$

A

B

36

# F l g. 18B

UPDATE TAP COEFFICIENTS OF DFE — S65

$$C_{-1}^{k+1} \Leftarrow C_{-1}^{k} + \alpha \times a_n \times (ERR_{-1})$$
$$C_1^{k+1} \Leftarrow C_1^{k} + \alpha \times a_{n-i-1} \times (ERR_{-1})$$

S66 — $k \geqq a$ — NO

YES

CALCULATE EVALUATE FUNCTION — S69

Zn : AVERAGE b SYMBOL
OR DISPERSE b SYMBOL

S67 — $k \geqq a+b$ — NO → TIME $k = k+1$ — S68

YES

COMPARE — S70
Zn WITH PREVIOUS
VALUE

CONTROL SAMPLING PHASE OF A/D CONVERTER — S71

PRE CURSOR : SHIFT PHASE TO SUCH DIRECTION
THAT Zn BECOME SMALL

PHASE TO THE DIRECTION TO INCREASE Zn

CONVERGE — S72 — NO → TIME $k = k+1$ — S73
?

YES

E N D

A

B

F i g. 19

# Fig. 20

RECEIVED SIGNAL → LINE EQUALIZER (111) → A D C (113) → D F E (114) → EVALUATING FUNCTION UNIT (115)

PLL CIRCUIT (112)

EP 0 476 487 A2

Fig. 21

# Fig. 22

RECEIVED SAMPLE
VALUE SIGNAL $X_n$

THIRD SUBTRACTOR — 126

RECEIVED SYMBOL DETERMINING UNIT — 120

FIRST SUBTRACTOR — 121

MULTIPLIER — 123 — $C_{-1}$

DELAY UNIT — 122

SECOND SUBTRACTOR — 124

TAP COEFFICIENT UPDATING UNIT — 125

$YRF_n$

# Fig. 23

FRANSVERSAL TYPE DFE
WITH PRE CURSOR

PRE CURSOR

DFE

RECEIVED
SAMPLE
VALUE $X_n$

DETERMINING UNIT

$TMIN_0$

$ERR_0$

126

120

$a_n$

$X \pm 2$

$YRF^n$

$\Sigma$

129

128n

127n

128a

127a

$a_{n-N}$

$a_{n-1}$

$a_n$

123

121

122

124

$ERR_{-1}$

$a_n$

$C_N$

142n

$C_1$

142a

$C_0$

$C_{-1}$

138n

141n

138n

141a

133

138

141

140n

$\alpha$

140a

$\alpha$

132

$\alpha$

140

$\alpha$

139n

139a

$a_{n-1}$

131

130

139

$a_n$

$a_{n-N-1}$

ERR

EP 0 476 487 A2

# Fig. 24

START

S144

SET INITIAL VALUE

DFE : $C_{-1} = 0.0$ (PRE CURSOR), $a_n$  $a_{n-N} = 0$
  $C_0$  $C_N = 0.0$, INITIALIZE $ERR_0$

S145

SHIFT SYMBOL VALUE

$a_{j-1} \Leftarrow a_j$ ( $j = n \sim n - N + 1$ )

S146

CALCULATE DFE ECHO REPLICA

DFE : $YRF_n = \sum_{i=1}^{N} C_1$  $\times a_{n-1}$

S147

CALCULATE OUTPUT SIGNAL

$THIN_0 = X_n - YRF_n$

S148

DETERMINE RECEIVED SYMBOL VALUE

$a_n = s1(TMIN_0)$

S149

CALCULATE RESIDUAL ERROR IN DEF (PRECURSOR)

$ERR_{-1} = ERR_0$
$ERR_0 = TMIN_0 - a_n$
$ERR_{-1} = ERR_{-1} - C_{-1} \times a_n$

S150

UPDATE TAP COEFFICIENT OF DFE ( I = 0 ～N )

$C_{-1}^{k+1} = C_{-1}^{k} + \alpha \times a_n \times (ERR_{-1})$
$C_1^{k+1} = C_1^{k} + \alpha \times a_{n-i-1} \times (ERR_{-1})$

S151 S152

CONVERGE ?  NO  TIME $k = k+1$

YES

E N D

43

Fig. 25

EVALUATING FUNCTION UNIT 158

PLL 159

PRE CURSOR

DETERMINING UNIT

157

DFE

RECEIVED SAMPLE VALUE $X_n$

ADC 156

LINE EQUALIZER 155

AGC 154

EP 0 476 487 A2

# F I g. 26A

Fig. 26

| F I g. 26A | F I g. 26B |
| --- | --- |

```
         ┌─────────┐
         │  START  │
         └─────────┘
              │
              ▼
```

**S160**

SET INITIAL VALUE

DFE : $C_{-1} = 0.0$ (PRECURSOR), $a_n \sim a_{n-N} = 0$
$C_0 \sim C_N = 0.0$, INITIALIZE $ERR_0$ AND $Z_n$

**S161**

SHIFT SYMBOL

$a_{j-1} \Leftarrow a_j \ (j = n \sim n-N+1)$

**S162**

CALCULATE SAMPLE VALUE BY ADC

$X_n$

**S163**

CALCULATE DFE ECHO REPLICA

DFE : $YRF_n \Leftarrow \sum\limits_{i=1}^{N} C_i \quad X_{an-i}$

**S164**

CALCULATE OUTPUT SIGNAL

$ERR_{-1} \Leftarrow ERR_0$
$TMIN_0 \Leftarrow X_n - YRF_n$

**S165**

DETERMINE RECEIVED SYMBOL VALUE

$a_n \Leftarrow s1 \ (TMIN_0)$

**S166**

CALCULATE RESIDUAL ERROR IN DFF (PRE CURSOR)

$ERR_0 \Leftarrow TMIN_0 - a_n$
$ERR_{-1} \Leftarrow ERRR_{-1} - C_{-1} \quad Xa_n$

```
    ┌───┐                              ┌───┐
    │ A │                              │ B │
    └───┘                              └───┘
```

# Fig. 26B

A

UPDATE TAP COEFFICIENT OF DFF

$$C_{-1}^{k+1} \Leftarrow C_{-1}^{k} + \alpha \times a_n \times (ERR_{-1})$$
$$C_{1}^{k+1} \Leftarrow C_{1} + \alpha \times a \times (ERR_{-1})$$

~ S167

B

S168

$k \geq a$    NO

YES

CALCULATE EVALUATING FUNCTION    S171

$Zn$ : CALCULATE AVERAGE OF b SYMBOLS

S169

$k \geq a + b$    NO    S170

TIME $k = k+1$

YES    S172

COMPARE $Zn$ WITH PREVIOUS VALUE

CONTROL SAMPLING PHASE OF ADC    S173

PHASE SHIFT TO THE DIRECTION TO INCREASE $Zn$

S174

CONVERGE ?    NO    S175

TIME $k = k+1$

YES

E N D

Fig. 27

47

*Fig. 28A*

*Fig. 28B*

$\alpha \cdot F_{n-k}$

(+3)

(+1)

(−1)

(−3)

m

(+3×α)

(+1×α)

(−1×α)

(−3×α)

m

EP 0 476 487 A2

# Fig. 29A

## Fig. 29B

(+3)

(+1)

(−1)

(−3)

# Fig. 30

| 301 | 302 | 303 | 304 |
|-----|-----|-----|-----|
| DEFINE<br><br>±A , ±B | DETERMINE IF<br>SYMBOL IS<br>BETWEEN<br>+A AND −A | DETERMINE IF<br>SYMBOL IS<br>GREATER<br>THAN +B | DETERMINE IF<br>SYMBOL IS<br>SMOLLER<br>THAN −B |

Fig. 31

SYMBOL VALUE

+3

+2

+1

+0.25

0

−0.25

−1

−2

−3

THRESHOLD LEVEL

Fig. 32

# Fig. 33

EP 0 476 487 A2

# Fig. 34

TRANSVERSAL TYPE DFE WITH PRE CURSOR

EP 0 476 487 A2

*Fig. 35*

$$\boxed{\text{START}}$$

**SET INITIAL VALUE**

DFE : $C_{-1} = 0.0$ (PRECURSOR), $a_n \sim a_{n-N} = 0$
$C_1 \sim C_N = 0.0$ INITIALIZE $ERR_0$

S225  S225a

**SHIFT SYMBOL**

$$a_{j-1} \Leftarrow a_j \, (j = n \sim n-N+1)$$

**CALCULATE DFE ECHO REPLICA**

$$\text{DFE} : YRF_n = \sum_{i=1}^{N} C_1 \times a_{n-1}$$

S226  S227

**CALCULATE OUTPUT SIGNAL**

$$TMIN_0 = X_n - YRF_n$$

S228

**DETERMINE RECEIVED SYMBOL VALUE**

$$a_n = s1 \, (TMIN_0)$$

**CALCULATE RESIDUAL ERROR IN DFE (PRECURSOR)**

$$ERR_{-1} = ERR_0$$
$$ERR_0 = TMIN_0 - a_n$$
$$ERR_{-1} = ERR_{-1} - C_{-1} \times a_n$$

S229

**UPDATE TAP COEFFICIENT OF DFE**

$$C_{-1}{}^{k+1} = C_{-1}{}^k + \alpha \times a_n \times (ERR_{-1})$$
$$C_1{}^{k+1} = C_1{}^k + \alpha \times a_{n-i-1} \times (ERR_{-1})$$

S230

S231        S232

CONVERGE ? —— NO ——> TIME $k = k + 1$

↓ YES

$$\boxed{\text{E N D}}$$